(19) Europäisches Patentamt
European Patent Office
Office européen des brevets

(11) Veröffentlichungsnummer : **0 302 916 B1**

(12) # EUROPÄISCHE PATENTSCHRIFT

(45) Veröffentlichungstag der Patentschrift : **22.04.92 Patentblatt 92/17**

(51) Int. Cl.$^5$ : **C09K 19/30,** C09K 19/34

(21) Anmeldenummer : **88901584.8**

(22) Anmeldetag : **08.02.88**

(86) Internationale Anmeldenummer : **PCT/EP88/00090**

(87) Internationale Veröffentlichungsnummer : **WO 88/06178 25.08.88 Gazette 88/19**

(54) **ELEKTROOPTISCHES ANZEIGEELEMENT.**

Die Akte enthält technische Angaben, die nach dem Eingang der Anmeldung eingereicht wurden und die nicht in dieser Patentschrift enthalten sind.

(30) Priorität : **18.02.87 DE 3705071**

(43) Veröffentlichungstag der Anmeldung : **15.02.89 Patentblatt 89/07**

(45) Bekanntmachung des Hinweises auf die Patenterteilung : **22.04.92 Patentblatt 92/17**

(84) Benannte Vertragsstaaten : **CH DE FR GB LI NL**

(56) Entgegenhaltungen :
**EP-A- 0 154 849**
**DE-A- 3 006 666**
**GB-A- 2 070 594**
**GB-A- 2 092 146**
**GB-A- 2 108 963**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **WEBER, Georg**
**Wilhelm-Leuschner-Str. 38**
**W-6106 Erzhausen (DE)**
Erfinder : **SCHEUBLE, Bernhard**
**Bluff 100 100-1, Yamate-cho Naka-ku**
**Yokohama-shi Kanagawa 231 (JP)**
Erfinder : **EIDENSCHINK, Rudolf**
**Konrad-Adenauer-Str. 1**
**W-6109 Mühltal 1 (DE)**
Erfinder : **WÄCHTLER, Andreas**
**Goethestrasse 34**
**W-6103 Griesheim (DE)**

EP 0 302 916 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft elektrooptische Flüssigkristall-Anzeigeelemente (FK-Anzeigeelemente) auf der Basis von TN-Zellen mit besonders kurzer Einschaltzeit $T_{on}$ bei Umschaltung von einer ersten Spannung, die unterhalb oder etwa bei der Schwellenspannung liegt, auf eine zweite Spannung, die im Anstieg der elektrooptischen Kennlinie liegt. Von besonderer Bedeutung ist die Erfindung somit bei Hochmultiplex-FK-Anzeigeelementen und insbesondere bei TFT-adressierten FK-Anzeigeelementen mit besonders kurzer Einschaltzeit.

Für FK-Anzeigeelemente werden die Eigenschaften nematischer oder nematisch-cholesterischer flüssigkristalliner Materialien ausgenutzt, ihre optischen Eigenschaften wie Lichtabsorption, Lichtstreuung, Doppelbrechung, Reflexionsvermögen oder Farbe unter dem Einfluß elektrischer Felder zu verändern. Die Funktion derartiger Anzeige elemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zelle, dem SBE-Effekt oder dem cholesterisch-nematischen Phasenübergang.

Für die technische Anwendung dieser Effekte in elektronischen Bauelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich, niedrige Viskosität,eine der Schichtdicke angepaßte optische Anisotropie, geringe Temperaturabhangigkeit der Schwellenspannung, hohe Steilheit der elektrooptischen Kennlinie und ausreichendes Lösungsvermögen für pleochroitische Farbstoffe gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen lassen sich jedoch auf diese Weise nicht leicht herstellen, da Komponenten mit hohen Schmelz- und Klärpunkten den Gemischen häufig auch eine hohe Viskosität verleihen. Dadurch werden die Schaltzeiten der damit hergestellten elektrooptischen Anzeigeelemente in unerwünschter Weise verändert. Entsprechende flüssigkristalline Einzelverbindungen bzw. diese enthaltende Gemische sind bereits bekannt aus EP-A- 0 154 849, GB-A- 21 08 963, DE-A- 30 06 666, GB-A- 20 92 146 und GB-A- 20 70 594.
Zur Verminderung der Schaltzeiten werden in bisher bekannter FK-Phasen Komponenten mit niedrigen Viskositäten bzw. Glasübergangstemperaturen und/oder besonders vorteilhaften elastischen Konstanten eingesetzt. Jedoch genügen diese Phasen nicht gleichzeitig allen oben angegebenen Erforcernissen insbesondere beiden die für viele Anwendungen nach wie vor eine zu hohe Einschaltzeit $T_{on}$ auf, insbesondere in FK-bezeigeelemente, bei denen die Umschaltung von einer ersten Spannung , die unterhalb oder etwa bei der Schwellenspannung liegt, auf eine zweite Spannung erfolgt, die im Anstieg der elektrooptischen Kennlinie liegt.

Im wesentlichen unterscheidet man bei elektrooptischen Flüssigkristallanzeigeelementen die statische ("static drive") und die dynamische Ansteuerung ("multiplex drive"). Zum Einschalten bei "Static drive"-Ansteuerung schaltet man von 0 Volt auf eine Spannung, die nahe bei oder oberhalb der Sättigungsspannung (= Spannung, mit der man 90 % des maximalen Kontrastes erhält) liegt. Beim Ausschalten wird auf 0 Volt zurückgeschaltet. Bei elektrooptischen Flüssigkristallanzeigeelementen, die im "Multiplexbetrieb" angesteuert werden, schaltet man von einer ersten Spannung V (off) auf die zweite Spannung V (on) und zurück. Das Verhältnis dieser beiden Spannungen wird festgelegt durch das "Multiplex-Verhältnis" und den "Bias"-Wert. Die absoluten Größen der beiden Spannungen ergeben sich aus der Betriebsspannung.
N = Zahl der "gemultiplexten" Linien
(1/N = Multiplexverhältnis)

$$a = \text{opt. Bias} = \sqrt{N} + 1$$

$$\frac{V(on)}{V(off)} = \left(\frac{\sqrt{N} + 1}{\sqrt{N} - 1}\right)^{1/2}$$

$$V(on) = \frac{\text{Batt. volt.}}{a \cdot \sqrt{\frac{N}{N + (a^2 - 1)}}}$$

$$V(off) = \frac{Batt.\ volt.}{a \cdot \sqrt{\frac{N}{N + ((a-2)^2-1)}}}$$

Bei einem Multiplexverhältnis von 1:4 und einem Bias von 1:3 beispielsweise ist das Verhältnis V(on) zu V(off) 1.73. Bei einer Betriebsspannung von 3 Volt beträgt V(on) 1.73 Volt und V(off) 1.00 Volt.

Bei 1:16 Multiplex und 1:5 Bias ist das Verhältnis V(on) zu V(off) beispielsweise 1.29; bei einer Betriebsspannung von 5 Volt ist V(on) gleich 1.58 Volt, V(off) beträgt 1.22 Volt.

Für ein gegebenes Anzeigeelement mit vorgegebener Ansteuerung wird das Dielektrikum im allgemeinen so ausgewählt, daß die erste Spannung V(off) für einen bestimmten Beobachtungswinkel bzw. für einen bestimmten Beobachtungswinkelbereich kurz unterhalb bzw. im Bereich der "Schwellenspannung" (= Spannung für 10 % des maximalen Kontrastes) liegt. Die zweite Spannung V(on) liegt dann im Anstieg der Kennlinie oberhalb der Schwellenspannung.

Bei Anzeigeelementen, welche unterschiedliche Graustufen anzeigen sollen (z.B. Videodisplays), ist es erforderlich, daß man durch Umschalten der Spannung die Helligkeit im Bereich von z.B. 10 % der maximalen Helligkeit bis z.B. 90 % der maximalen Helligkeit beliebig ändert

Bei Multiplexansteuerung (insbesondere auch mit Graustufen) und TFT-Ansteuerung wird beim Ein- und Ausschalten bzw. beim Umschalten von einer Graustufe zur einer anderen Graüstufe von einer Spannung unterhalb oder im Bereich der Schwellenspannung auf eine zweite Spannung umgeschaltet, die oberhalb der Schwellenspannung im Bereich des Anstiegs der Kennlinie liegt.

Bei "static drive" sind die Einschaltzeiten im allgemeinen relativ klein, da die Einschaltspannung sehr viel größer als die Sättigungsspannung ist.

Bei Multiplexansteuerung und TFT-Ansteuerung dagegen sind insbesondere die Einschaltzeiten meist relativ lang.

Es besteht somit immer noch ein großer Bedarf nach flüssigkristallinen Phasen mit hohen Klärpunkten, niederen Schmelzpunkten und sehr kurzen Einschaltzeiten bei Einsatz in FK-Anzeigeelementen, bei denen von einer Spannung, die unterhalb oder etwa bei der Schwellenspannung liegt, auf eine zweite Spannung umgeschaltet wird, die im Anstieg der elektrooptischen Kennlinie liegt.

Der Erfindung liegt die Aufgabe zugrunde, FK-Anzeigeelemente bereitzustellen, die einen breiten Arbeitstemperaturbereich besitzen und die oben angegebenen Nachteile nicht oder nur in geringerem Maß aufweisen.

Es wurde gefunden daß FK-Anzeigeelemente mit besonders günstigen elektrooptischen Eigenschaften, insbesondere mit außergewöhnlich kurzen Einschaltzeiten $T_{on}$ bei Umschaltung von einer ersten Spannung, die unterhalb oder etwa bei der Schwellenspannung liegt, auf eine zweite Spannung, die im bestieg der elektrooptischen Kennlinie liegt, erhalten werden, wenn das Dielektrikum mindestens eine Komponente der Formel I enthält,

$$R^1\text{-}A^1\text{-}Z^1\text{-}A\text{-}O\text{-}R^2 \quad I$$

Worin

| | |
|---|---|
| $R^1$ und $R^2$ | jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen |
| $Z^1$ | $-CH_2CH_2-$ oder eine Einfachbindung, |
| $A^1$ | trans-1,4-Cyclohexylen, und |
| A | unsubstituiertes oder durch Fluor substituiertes 1,4-Phenylen bedeutet. |

Gegenstand der Erfindung ist somit ein elektrooptisches Anzeigeelement auf der Basis einer TN-Zelle mit besonders kurzer Einschaltzeit $T_{on}$ bei Umschaltung von einer ersten Spannung, die unterhalb oder etwa bei der Schwellenspannung liegt, auf eine zweite Spannung, die im bestieg der elektrooptischen Kennlinie liegt, dadurch gekennzeichnet, daß das Dielektrikum gleichzeitig mindestens eine Komponente der Formel I,

$$R^1\text{-}A^1\text{-}Z^1\text{-}A\text{-}O\text{-}R^2 \quad I$$

worin

| | |
|---|---|
| $R^1$ und $R^2$ | jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen |
| $Z^1$ | $-CH_2CH_2-$ oder eine Einfachbindung, |
| $A^1$ | trans-1,4-Cyclohexylen, und |
| A | unsubstituiertes oder durch Fluor substituiertes 1,4-Phenylen bedeutet, |

und gegebenenfalls mindestens eine Komponente ausgewählt aus den Verbindungen der Formeln II und III enthält,

$$R^3\text{-}A^2\text{-}Z^2\text{-}A^3\text{-}Z^3\text{-}A'\text{-}R^4 \quad II$$

$$R^3\text{-}A^2\text{-}Z^2\text{-}A'\text{-}Z^3\text{-}A^3\text{-}R^4 \quad III$$

worin

$R^3$ geradkettiges Alkyl mit 2 bis 7 C-Atomen, worin auch eine $CH_2$-Gruppe durch -O- oder -CH=CH ersetzt sein kann,

$R^4$ H, Alkyl mit 1 bis 9 C-Atomen, worin auch eine oder zwei nicht benachbarte $CH_2$-Gruppen durch -O-, -CO-, -O-CO-, -CO-O- und/oder -CH=CH- ersetzt sein können, Halogen, CN, NCS oder $N_3$ bedeutet,

$Z^2$ und $Z^3$ jeweils $-CH_2CH_2-$, $-OCH_2-$, $-CH_2O-$ -O-CO-, -COO-; oder eine Einfachbindung, wobei mindestens eine der Gruppen $Z^2$ und $Z^3$ eine Einfachbindung ist,

$A^2$ und $A^3$ jeweils trans-1,4-Cyclohexylen, worin auch eine oder zwei nicht benachbarte $CH_2$-Gruppen durch O und/oder S ersetzt sein könne, und

A′ unsubstituiertes oder durch Fluor substituiertes 1,4-Phenylen bedeutet, worin auch eine oder zwei CH-Gruppen durch N ersetzt sein können.

Ferner ist Gegenstand der Erfindung ein entsprechendes Anzeigeelement, dessen Dielektrikum weiterhin mindestens eine Komponente der Formel IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad \text{IV}$$

enthält, worin

$Z^4$ und $Z^5$ jeweils $-CH_2CH_2-$, $-OCH_2-$, $-CH_2O-$, -O-CO-, -CO-O- oder eine Einfachbindung,

$A^4$ und $A^5$ jeweils trans-1,4-Cyclohexylen oder unsubstituiertes oder durch Fluor substituiertes 1,4-Phenylen, worin auch eine oder zwei CH-Gruppen durch N ersetzt sein können,

m und n jeweils 0 oder 1 bedeuten,

und $R^3$, $R^4$, $A^2$,-$A^3$, A, $Z^2$ und $Z^3$ die in Anspruch 4 angegebene Bedeutung haben, sowie ein entsprechendes elektrooptisches Anzeigeelement, das im Bereich des ersten Transmissionsminimum nach Gooch-Tarry betrieben wird. Gegenstand der Erfindung ist weiterhin die Verwendung von Verbindungen der Formel I,

$$R^1\text{-}A^1\text{-}Z^1\text{-}A\text{-}O\text{-}R^2 \quad \text{I}$$

worin

$R^1$ und $R^2$ jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-Cyclohexylen, und

A unsubstituiertes oder durch Fluor substituiertes 1,4-Phenylen bedeutet,

als Komponenten flüssigkristalliner Dielektrika mit mindestens drei flüssigkristallinen Verbindungen zur Verminderung der Einschaltzeit $T_{on}$ von elektrooptischen Anzeigeelementen auf der Basis einer TN-Zelle bei Umschaltung von einer ersten Spannung, die unterhalb oder etwa bei der Schwellenspannung liegt, auf eine zweite Spannung, die im bestieg der elektroptischen Kennlinie liegt, sowie ein Verfahren zur Verminderung der Einschaltzeit $T_{on}$ von elektrooptischen Anzeigeelementen auf der Basis einer TN-Zelle bei Umschaltung von einer ersten Spannung, die unterhalb oder etwa bei der Schwellenspannung liegt, auf eine zweite Spannung, die im bestieg der elektrooptischen Kennlinie liegt, dadurch gekennzeichnet, daß das Dielektrikum mindestens eine Komponente der Formel I,

$$R^1\text{-}A^1\text{-}Z^1\text{-}A\text{-}O\text{-}R^2 \quad \text{I}$$

worin

$R^1$ und $R^2$ jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-cyclohexylen, und

A unsubstituiertes oder durch Fluor substituiertes 1,4-Phenylen bedeutet,

enthält.

Gegenstand der Erfindung ist schließlich ein Dielektrikum zur Verwendung in einem elektrooptischen Anzeigeelement auf der Basis einer TN-Zelle mit besonders kurzer Einschaltzeit $T_{on}$ bei Umschaltung von einer ersten Spannung, die unterhalb oder etwa bei der Schwellenspannung liegt, auf eine zweite Spannung die im Anstieg der elektrooptischen Kennlinie liegt, dadurch gekennzeichnet, daß es gleichzeitig mindestens eine Komponente der Formel I,

$$R^1\text{-}A^1\text{-}Z^1\text{-}A\text{-}O\text{-}R^2 \quad \text{I}$$

worin

$R^1$ und $R^2$ jeweils unabhängig, voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-Cyclohexylen, und

A unsubstituiertes oder durch Fluor substituiertes 1,4-Phenylen bedeutet,

und mindestens eine Komponente ausgewählt aus den Verbindungen der Formeln II und III enthält,

$R^3$-$A^2$-$Z^2$-$A^3$-$Z^3$-A′-$R^4$ II

$R^3$-$A^2$-$Z^2$-A′-$Z^3$-$A^3$-$R^4$ III

worin

$R^3$ geradkettiges Alkyl mit 2 bis 7 C-Atomen, worin auch eine $CH_2$-Gruppe durch -O- oder -CH=CH ersetzt sein kann,

$R^4$ H, Alkyl mit 1 bis 9 C-Atomen, worin auch eine oder zwei nicht benachbarte $CH_2$-Gruppen durch -O-, -CO-, -O-CO-, -CO-O- und/oder -CH=CH- ersetzt sein können, Halogen, CN, NCS oder $N_3$ bedeutet,

$Z^2$ und $Z^3$ jeweils -$CH_2CH_2$-, -$OCH_2$-, -$CH_2O$- -O-CO-, -COO-, oder eine Einfachbindung, wobei mindestens eine der Gruppen $Z^2$ und $Z^3$ eine Einfachbindung ist,

$A^2$ und $A^3$ jeweils trans-1,4-Cyclohexylen, worin auch eine oder zwei nicht benachbarte $CH_2$-Gruppen durch O und/oder S ersetzt sein können, und

A′ unsubstituiertes oder durch Fluor substituiertes 1,4-Phenylen bedeutet, worin auch eine oder zwei CH-Gruppen durch N ersetzt sein können,

sowie ein entsprechendes Dielektrium welches mindestens eine Komponente der Formel IV

$R^3$-$A^2$-$Z^2$-$A^3$-$(Z^4\text{-}A^4)_m$-$Z^3$-A′-$(Z^5\text{-}A^5)_n$-$R^4$ IV

enthält, worin

$Z^4$ und $Z^5$ jeweils -$CH_2CH_2$-, -$OCH_2$-, -$CH_2O$-, -O-CO-, -CO-O oder eine Einfachbindung,

$A^4$ und $A^5$ jeweils trans-1,4-Cyclohexylen oder unsubstituiertes oder durch Fluor substituiertes 1,4-Phenylen, worin auch eine oder zwei CH-Gruppen durch N ersetzt sein können,

m und n jeweils 0 oder 1 bedeuten,

und $R^3$, $R^4$, $A^2$, $A^3$, A′, $Z^2$ und $Z^3$ die in Anspruch 4 angegebene Bedeutung haben.

Die Dielektrika können auch weitere, dem Fachmann bekannte und in der Literatur beschriebene Zusätze enthalten. Beispielsweise können 0-15 % pleochroitische Farbstoffe zugesetzt werden, ferner Leitsalze, vorzugsweise Ethyl-dimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, seiten 249-258, (1973)) zur Verbesserung der Letfähigkeit oder Substanzen zur Veränderung der dielektrischen Anisotropie, der Viskosität und/oder der Orientierung der nematischen Phasen. Derartige substanzen sind z.B. in den DE-OS 22 09 127, 22 40 864, 23 21 632, 23 38 281, 24 50 083, 26 37 430 und 28 63 728 beschrieben.

Die einzelnen Komponenten der Formel I, II, III und IV der erfindungsgemäßen Flüssigkristallphasen sind entweder bekannt oder ihr° Herstellungsweisen sind für den einschlägigen Fachmann aus den Stand der Technik ohne weiteres abzuleiten, da sie auf in der Literatur beschriebenen Standardverfahren basieren.

Entsprechende Verbindungen werden beispielsweise beschrieben in den deutschen Patentanmeldungen 26 36 684, 28 00 553, 29 33 563, 29 33 611, 29 48 836, 30 01 661, 31 02 017, 31 49 139, 32 06 269, 31 39 130, 32 23 637, 32 11 601, 33 17 597, 33 17 921, 33 39 218, 34 01 320, 34 10 734, 35 45 345, in den europäischen Patenanmeldungen 0 019 665, 0 058 512, 0 062 470, 0 084 194, 0 084 974, 0 090 671, 0 094 198, 0 099 099, 0 102 047, 0 119 756, 0 122 389, 0 129 177, 0 167 912, 0 168 683, in der internationalen Patentanmeldung WO 85/04874, in den japanischen Patentanmeldungen 58-126 821-A, 58-177 989-A, 60-161 941-A, 60-161 957-A, 60-222 458-A, 60-239 470-A und in USP 4,439, 015.

Überraschenderweise zeigt sich, daß die erfindungsgemäßen Dielektrika, insbesonders die Kombination von komponenten der Formeln I und II ünd/oder III unter den erwähnten speziellen Ansteuerungsbedingungen (d.h. z.B. in TFT- oder Hochmultiplexdisplays) wesentlich kürzere Schaltzeiten (insbesondere wesentlich kürzere Einschaltzeiten) haben als andere Dielektrika ohne diese spezielle Substanzkombination, auch"wenn relevante physikalische Eigenschaften und Meßbedingungen (Rotationsviskosität, elastische Konstanten, das Produkt d . $\Delta n$ aus Schichtdicke und optisch.er Anisotropie, Ansteuerspannung) praktisch gleich sind.

Die besseren (Ein-)Schaltzeiten der erfindungsgemäßen FK-Anzeigeelemente sind nicht nur bedingt durch bessere Viskositäten oder geeignetere elastische Konstanten. Der Grund liegt sehr wahrscheinlich vor allem in der Art der Wechselwirkungen zwischen den FK-Molekülen und den Displayoberflächen. Insbesondere gehen wir davon aus, daß die erfindungsgemäßen Mischungen einen größeren Tiltwinkel haben als vergleichbare andere Mischungen und deshalb auch gerade die Einschaltzeit deutlich. kürzer ist.

Werden solche Dielektrika andere Verbindungen zugesetzt, die nicht den genannten Kriterien entsprechen (z.B. Moleküle, die ausschließlich Cyclohexanringe enthalten), verschlechtern sich die Schaltzeiten.

In den Verbindungen der Formel I sind $R^1$ und $R^2$ unabhängig voneinander vorzugsweise Alkyl, worin auch eine (nicht mit -O- oder -$A^1$- direkt verknüpfte) $CH_2$-Gruppe durch -O- oder -CH=CH- ersetzt sein kann. Besonders bevorzugt sind geradkettige Alkylgruppen mit 1 bis 5 C-Atomen. Ferner bevorzugt sind Verbindungen der Formel I, worin $R^2$ Alkanoyl bedeutet. Vorzugsweise ist $R^2$ dann geradkettiges Alkanoyl mit 2 bis 5 C-Atomen. $Z^1$ ist -$CH_2CH_2$- oder eine Einfachbindung. In besonders bevorzugten Verbindungen ist $Z^1$ eine Einfachbindung. $A^1$ ist trans-1,4-Cyclohexylen. A ist vorzugsweise 1,4-Phenylen. Besonders bevorzugte Komponenten der For-

mel I sind diejenigen der Teilformeln Ia, Ib und Id:

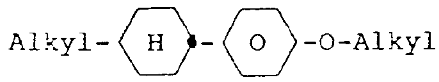

Ia

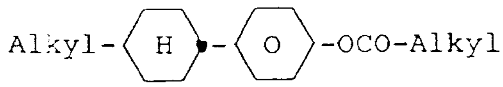

Ib

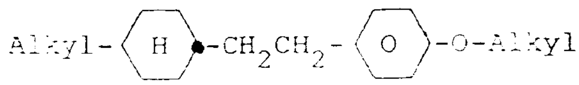

Id

Verbindungen der Teilformel Ia sind besonders bevorzugt.

Die Dielektrika der erfindungsgemäßen Anzeigeelemente enthalten vorzugsweise 10 bis 80 %, insbesondere 20 bis 70 %, Gesamtanteil an Verbindungen der Formel I. Ein heiterer bevorzugter Gesamtanteil an Verbindungen der Formel I ist 35 bis 69 %.

In den Verbindungen der Formeln II und III bedeuten $A^2$ und $A^3$ unabhängig voneinander jeweils vorzugsweise trans-1,4-Cyclohexylen oder trans-1,3-Dioxan-2,5-diyl, insbesondere bevorzugt trans-1,4-Cyclohexylen. $R^3$ ist geradkettiges Alkyl mit vorzugsweise 2 bis 7 C-Atomen, worin auch eine $CH_2$-Gruppe durch -O- oder -CH=CH- ersetzt sein kann. Besonders bevorzugt ist n-Alkyl. $R^4$ ist vorzugsweise geradkettiges Alkyl mit vorzugsweise 2 bis 7 C-Atomen, worin auch eine $CH_2$-Gruppe durch -O- oder -CH=CH-ersetzt sein kann, oder Halogen, CN,NCS oder $N_3$. Besonders bevorzugte Bedeutungen für $R^4$ sind n-Alkyl, n-Alkoxy, F, CN und NCS. $Z^2$ und $Z^3$ bedeuten vorzugsweise jeweils unabhängig voneinander $-CH_2CH_2-$, -CO-O-, -O-CO- oder eine Einfachbindung, wobei mindestens eine der Gruppen $Z^2$ und $Z^3$ eine Einfachbindung ist.

A′ ist vorzugsweise 1,4-Phenylen, 2- oder 3-Fluor-1,4-Phenylen, Pyridin-2,5-diyl oder Pyrimidin-2,5-diyl. Besonders bevorzugte Bedeutungen von A′ sind 1,4-Phenylen und 2- oder 3-Fluor-1,4-phenylen.

Besonders bevorzugte Komponenten der Formel II sind diejenigen der Teilformeln IIa bis IIv:

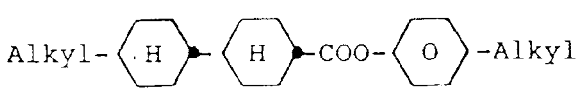

IIa

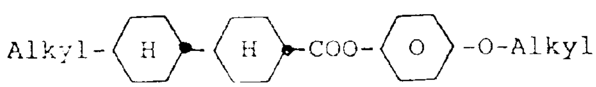

IIb

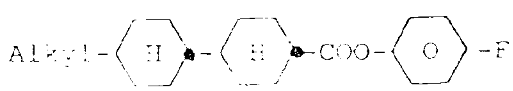

IIc

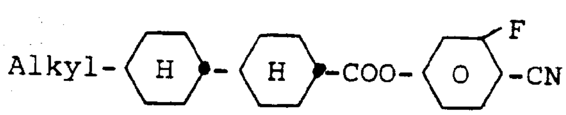

IId

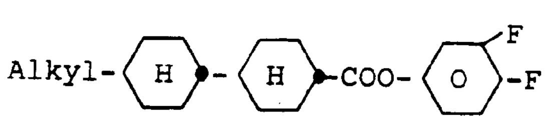

IIe

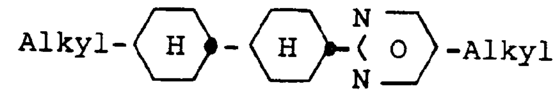

IIf

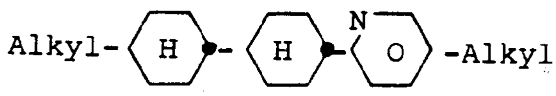

IIg

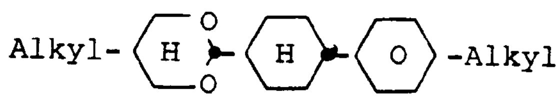

IIh

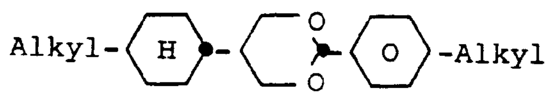

IIi

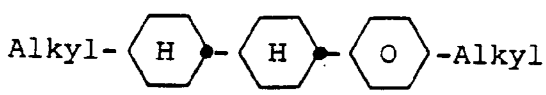

IIj

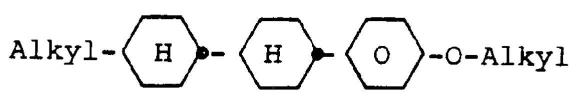

IIk

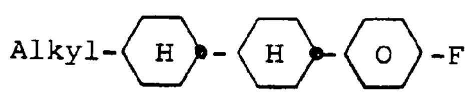

IIl

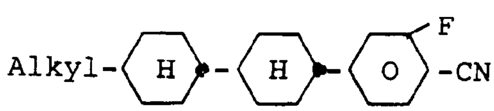

IIm

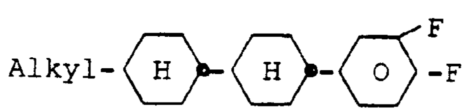

IIn

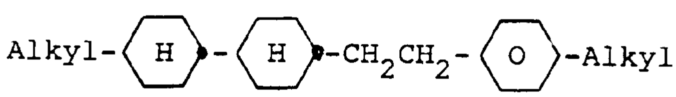

IIo

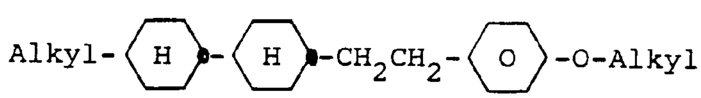

IIp

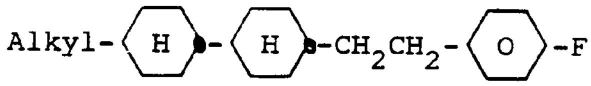

IIq

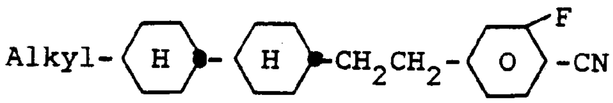

IIr

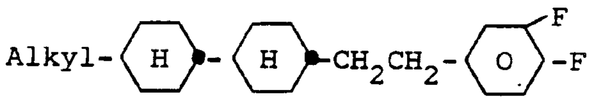

IIs

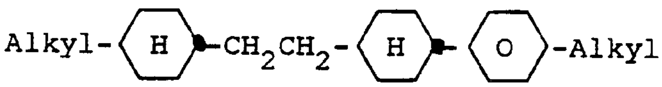

IIt

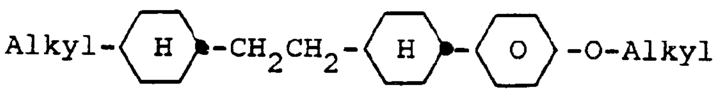

IIu

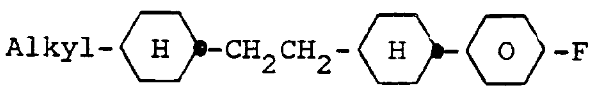

IIv

Darunter sind diejenigen der Teilformel IIa, IIc, IIj, III, IIm, IIn, IIo, IIp, IIq, IIr und IIs bevorzugt. Insbesondere bevorzugt sind diejenigen der Teilformeln IIo und IIp.

Besonders bevorzugte Komponenten der Formel III sind diejenigen der Teilformeln IIIa, IIIb und IIIc:

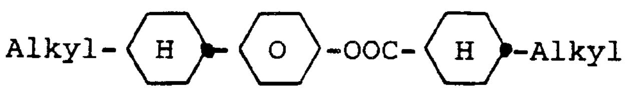

IIIa

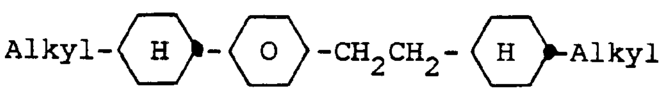

IIIb

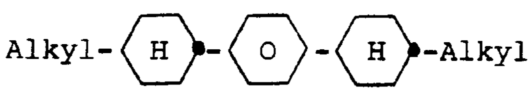

IIIc

Darunter sind diejenigen der Teilformeln IIIa und IIIc, insbesondere IIIa, bevorzugt.

Bevorzugte Dielektrika enthalten neben Komponenten der Formel I mindestens eine Komponente der Formel II.

Die Dielektrika enthalten vorzugsweise 5 bis 50 %, insbesondere 10 bis 40 %, Gesamtanteil an Verbindungen der Formeln II und III. Ein weiterer bevorzugter Gesamtanteil ist 20 bis 35 %.

In den Verbindungen der Formel IV bedeuten $Z^4$ und $Z^5$ jeweils unabhängig voneinander vorzugsweise -$CH_2CH_2$-, -CO-O-, -O-CO- oder eine Einfachbindung. $A^4$ und $A^5$ bedeuten vorzugsweise trans-1,4-Cyclohexylen oder 1,4-Phenylen. $R^3$, $R^4$, $A^2$, $A^3$, A′, $Z^2$ und $Z^3$ haben die bei den Formeln II und III angegebenen bevorzugten Bedeutungen. (m + n) ist vorzugsweise 1.

Besonders bevorzugte Verbindungen der Formel IV sind diejenigen der Teilformeln IVa bis IVk:

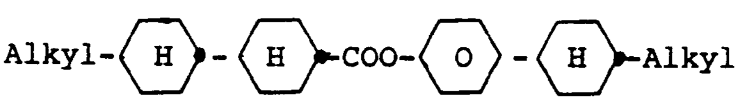

IVa

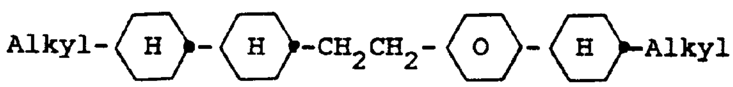 IVb

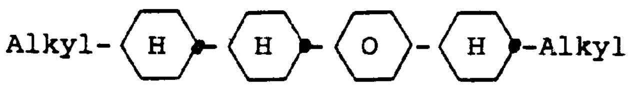 IVc

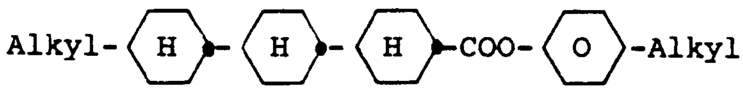 IVd

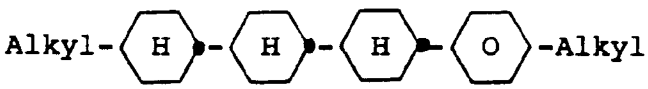 IVe

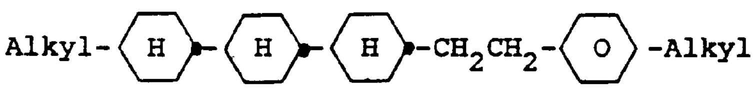 IVf

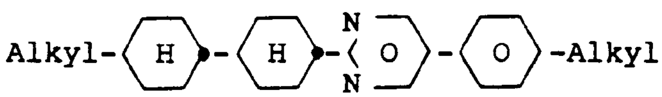 IVg

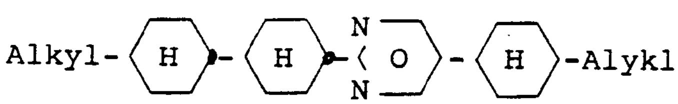 IVh

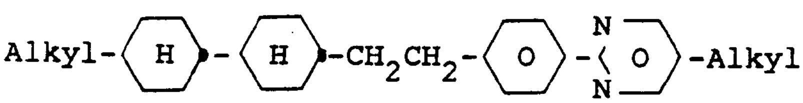 IVi

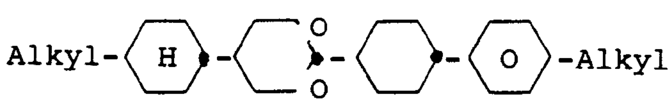 IVj

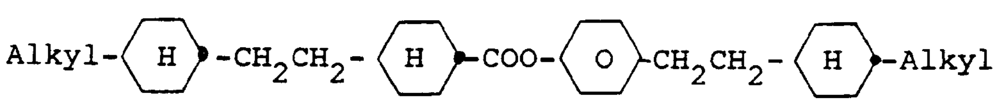 IVk

Darunter sind diejenigen der Teilformeln IVa, IVb, IVg, IVh, IVj und IVK, insbesondere diejenigen der Teilformel IVa besonders bevorzugt.

Die Dielektrika enthalten vorzugsweise 0 bis 40 %, insbesondere 5 bis 30 %, Gesamtanteil an Verbindungen der Formel IV.

Der Gehalt an ausgeprägt dielektrisch positiven Verbindungen in den Dielektrika beträgt vorteilhafterweise 10 bis 50 %, insbesondere vorzugsweise 20 bis 40 %. Im Prinzip können alle üblichen dielektrisch positiven Komponenten eingesetzt werden. Die Wahl der am besten geeigneten Verbindungen hängt vor allem davon ab, welche Schwellenspannung und optische Anisotropie gewünscht wird. Es körnen dielektrisch positive Verbindungen der Formeln II, III und/oder IV gewählt werden und/oder andere übliche Verbindungen, z. B. solche der folgenden Formeln Va bis Ve:

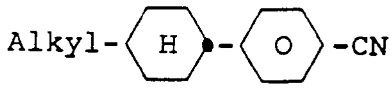

Va

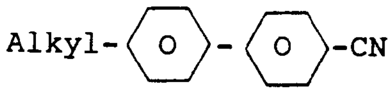

Vb

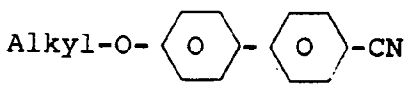

Vc

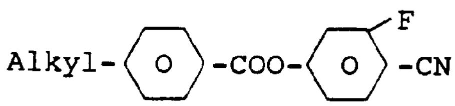

Vd

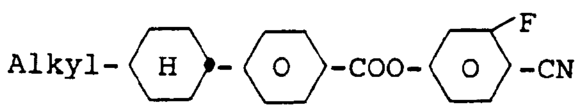

Ve

Die folgenden Beispiele sollen die Erfindung erläutern, ohne sie zu begrenzen.

Es bedeutet:

| | |
|---|---|
| S-n | Phasenübeigangs-Temperatur smektisch-nematisch, in Grad Celsius, |
| Klp. | Klärpunkt, in Grad Celsius, |
| Visk. | Viskosität bei 20° (m Pa.s), |
| Schw. | Schwellenspannung einer TN-Zelle bei 20°, Beobachtungswinkel 0° (senkrecht) und 10 % Kontrast. |
| $T_{on}$, $T_{off}$ | Ein-bzw. Ausschaltzeit in msec. |
| $K_3/K_1$ | Verhältnis der elastischen Konstanten für die Biegung und die Spreizung |
| $\Delta n$ | Doppelbrechung |

Vor und nachstehend sind alle Temperaturen in °C angegeben. Die Prozentzahlen sind Gewichtsprozente.

Durchführung der Schaltzeitenmessung:

Sollen die Schaltzeiten von Flüssigkristallen in Displays gemessen werden, so wird bei der sogenannten statistischen Ansteuerung von 0 Volt auf eine Spannung geschaltet, die z.B. etwa das 2- bis 3-fache der Schwellenspannung beträgt. Beträgt die Schwelle beispielsweise 2.0 Volt, so kann man die Schaltzeiten messen beim Schalten von 0 Volt auf 4-6 Volt und zurück. Unter diesen Bedingungen sind die Einschaltzeiten meist etwas kürzer als die Ausschaltzeiten.

Bei Ansteuerung im Multiplexbetrieb wird jedoch von einer ersten Spannung, die unterhalb oder etwa bei der Schwelle liegt, auf eine zweite Spannung umgeschaltet, die im Anstieg der Kennlinie liegt. Dies gilt insbesondere bei höheren Multiplexverhältnissen und bei TFT-Displays. Unter diesen Bedingungen sind insbesondere die Einschaltzeiten sehr lang.

Um diese Bedingungen zu simulieren, wurde bei unseren Messungen von einer festen Ausgangsspannung von genau 1.00 Volt auf die Spannung geschaltet, bei der man (bei senkrechter Beobachtung) 40 % des maximalen Kontrastes erreicht.

Die Untersuchungen wurden durchgeführt an Mischungen für das "erste Minimum" nach Gooch und Tarry. Das Produkt aus Schichtdicke und Doppelbrechung lag deshalb im Bereich von etwa 0,5.

Beispiel 1

Ein Gemisch aus

28 % trans-1-p-Methoxyphenyl-4-propylcyclohexan,
23 % trans-1-p-Ethoxyphenyl-4-propylcyclohexan,
18 % trans-1-p-Butoxyphenyl-4-propylcyclohexan,
3 % 4,4′-Bis-(trans-4-propylcyclohexyl)-biphenyl,
2 % 4,4′-Bis-(trans-4-pentylcyclohexyl)-biphenyl,
6 % 4-(trans-4-Pentylcyclohexyl)-4′-(trans-4-propyl-cyclohexyl)-biphenyl,
7 % trans,trans-4-(2-p-Cyanphenyl-ethyl)-4′-ethyl-bicyclohexyl,
7 % trans,trans-4-(2-p-Cyanphenyl-ethyl)-4′-propyl-bicyclohexyl,
und
6 % trans,trans-4-(2-p-Cyanphenyl-ethyl)-4′-pentyl-bicyclohexyl,
zeigt Klp. 76,3 °, Δn 0,1004, Schw. 2,6 V, $T_{on}$ 120 msec und $T_{off}$ 15 msec.

Beispiel 2

Ein Gemisch aus

20 % p-trans-4-Propylcyclohexyl-benzonitril,
22 % trans-1-p-Methoxyphenyl-4-propylcyclohexan,
16 % trans-1-p-Ethoxyphenyl-4-propylcyclohexan,
11 % trans-1-p-Butoxyphenyl-4-propylcyclohexan,
10 % trans,trans-4-(2-p-Fluorphenyl-ethyl)-4′-pentyl-bicyclohexyl,
10 % trans,trans-4-(2-p-Propylphenyl-ethyl)-4′-propyl-bicyclohexyl,
3 % 4,4′-Bis-(trans-4-propylcyclohexyl)-biphenyl,
2 % 4,4′-Bis-(trans-4-pentylcyclohexyl)-biphenyl
und
6 % 4-(trans-4-Pentylcyclohexyl)-4′-(trans-4-propylcyclohexyl)-biphenyl
zeigt Klp. 71°, Δn 0,1017, Schw. 2,1 V, $T_{on}$ 86 msec und $T_{off}$ 15 msec.

Beispiel 3

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
10 % trans,trans-4-Propyl-bicyclohexyl-4′-carbonsäure-p-propylphenylester,
10 % trans,trans-4-Propyl-bicyclohexyl-4′-carbonsäure-p-pentylphenylester,
3 % 4,4′-Bis-(trans-4-propylcyclohexyl)-biphenyl,
2 % 4,4′-Bis-(trans-4-pentylcyclohexyl)-biphenyl
und
6 % 4-(trans-4-Pentylcyclohexyl)-4′-(trans-4-propylcyclohexyl)-biphenyl
zeigt Klp. 79,5 °, Δn 0,1029, Schw. 2,13 V, $T_{on}$ 98 msec, $T_{off}$ 14 msec.

Beispiel 4

Ein Gemisch aus

20 % p-trans-4-Propylcyclohexyl-benzonitril,
20 % trans-1-p-Methoxyphenyl-4-propylcylohexan,
15 % trans-1-p-Ethoxyphenyl-4-propylcylohexan,
14 % trans-1-p-Butoxyphenyl-4-propylcylohexan,
10 % trans-4-Butylcyclohexancarbonsäure-(p-trans-4-propylcyclohexylphenylester),
10 % trans-4-Pentylcyclohexancarbonsäure-(p-trans-4-propylcyclohexylphenylester),

3 % 4,4′-Bis-(trans-4-propylcyclohexyl)-biphenyl,
2 % 4,4′-Bis-(trans-4-pentylcyclohexyl)-biphenyl
und
6 % 4-(trans-4-Pentylcyclohexyl)-4′-(trans-4-propylcyclohexyl)-biphenyl
zeigt Klp. 80,3°, Δn 0,1003, Schw. 2,2 V, $T_{on}$ 127 msec und $T_{off}$ 16 msec.

Beispiel 5

Ein Gemisch aus

20 % p-trans-4-Propylcyclohexyl-benzonitril,
22 % trans-1-p-Methoxyphenyl-4-propylcylohexan,
16 % trans-1-p-Ethoxyphenyl-4-propylcylohexan,
11 % trans-1-p-Butoxyphenyl-4-propylcylohexan,
10 % trans,trans-4-(2-p-Propylphenyl-ethyl)-4′-propyl-bicyclohexyl,
10 % trans,trans-4-(2-p-Propylphenyl-ethyl)-4′-pentyl-bicyclohexyl,
3 % 4,4′-Bis-(trans-4-propylcyclohexyl)-biphenyl,
2 % 4,4′-Bis-(trans-4-pentylcyclohexyl)-biphenyl
und
6 % 4-(trans-4-Pentylcyclohexyl)-4′-(trans-4-propylcyclohexyl)-biphenyl
zeigt Klp. 71,8°, Δn 0,1030, Schw. 2,16 V, $T_{on}$ 107 msec und $T_{off}$ 16 msec.

Beispiel 6

Ein Gemisch aus

20 % p-trans-4-Propylcyclohexyl-benzonitril,
22 % trans-1-p-Methoxyphenyl-4-propylcylohexan,
16 % trans-1-p-Ethoxyphenyl-4-propylcylohexan,
11 % trans-1-p-Butoxyphenyl-4-propylcylohexan,
20 % trans,trans-4-(2-p-Fluorphenyl-ethyl)-4′-pentyl-bicyclohexyl,
3 % 4,4′-Bis-(trans-4-propylcyclohexyl)-biphenyl,
2 % 4,4′-Bis-(trans-4-pentylcyclohexyl)-biphenyl und
6 % 4-(trans-4-Pentylcyclohexyl)-4′-(trans-4-propylcyclohexyl)-biphenyl
zeigt Klp. 72,0°, Δn 0,1000, Schw. 2,13 V, $T_{on}$ 126 msec und $T_{off}$ 19 msec.

Beispiel 7

Ein Gemisch aus

12 % p-trans-4-Propylcyclohexyl-benzonitril,
8 % p-trans-4-Butylcyclohexyl-benzonitril,
15 % trans-1-p-Ethoxyphenyl-4-propylcyclohexan,
13 % trans-1-p-Butoxyphenyl-4-butylcyclohexan,
8 % trans-1-p-Ethoxyphenyl-4-butylcyclohexan,
9 % trans-1-p-Methoxyphenyl-4-pentylcyclohexan,
5 % trans-1-p-Ethoxyphenyl-4-pentylcyclohexan,
5 % trans,trans-4-Propyl-bicyclohexyl-4′-carbonsäure-p-propylphenylester,
5 % trans,trans-4-Propyl-bicyclohexyl-4′-carbonsäure-p-pentylphenylester,
5 % trans,trans-4-Butyl-bicyclohexyl-4′-carbonsäure-p-propylphenylester,
5 % trans,trans-4-Butyl-bicyclohexyl-4′-carbonsäure-p-pentylphenylester,
3 % 4,4′-Bis-(trans-4-propylcyclohexyl)-biphenyl,
2 % 4,4′-Bis-(trans-4-pentylcyclohexyl)-biphenyl
und
5 % 4-(trans-4-Pentylcyclohexyl)-4′-(trans-4-propylcyclohexyl)-biphenyl
zeigt Klp. 81°, Δn 0,1007, Schw. 2,3 V, $T_{on}$ 08 msec. und $T_{off}$ 16 msec.

Beispiel 8

Ein Gemisch aus

15 % p-trans-4-Propylcyclohexyl-benzonitril,
10 % p-trans-4-Butylcylcohexyl-benzonitril,
15 % trans-1-p-Methoxyphenyl-4-propylcyclohexan,
15 % trans-1-p-Ethoxyphenyl-4-propylcyclohexan,
10 % trans-1-p-Butoxyphenyl-4-propylcyclohexan,
20 % trans,trans-4-(2-p-Propylphenyl-ethyl)-4′-propyl-bicyclohexyl
und
15 % trans,trans-4-(2-p-Propylphenyl-ethyl)-4′-pentyl-bicyclohexyl
zeigt Klp. 64,8°, Δn 0,0940, Schw. 1,95 V, $T_{on}$ 119 msec und $T_{off}$ 19 msec.

Beispiel 9

Ein Gemisch aus

20 % p-trans-4-Propylcyclohexyl-benzonitril,
15 % trans-1-p-Methoxyphenyl-4-propylcyclohexan,
10 % trans-1-p-Ethoxyphenyl-4-propylcyclohexan,
10 % trans-1-p-Butoxyphenyl-4-propylcyclohexan,
14 % trans,trans-4-Propoxy-4′-propyl-bicyclohexan,
10 % trans,trans-4-Propyl-bicyclohexyl-4′-carbonsäure-p-propylphenylester,
10 % trans,traris-4-Propyl-bicyclohexyl-4′-carbonsäure-p-pentylphenylester,
3 % 4,4′-Bis-(trans-4-propylcyclohexyl)-biphenyl,
2 % 4,4′-Bis-(trans-4-pentylcyclohexyl)-biphenyl
und
6 % 4-(trans-4-Pentylcyclohexyl)-4′-(trans-4-propylcyclohexyl)-biphenyl
zeigt Klp. 81,7°, Δn 0,0975, Schw. 2,15 V, $T_{on}$ 122 msec und $T_{off}$ 18 msec.

Beispiel 10

Ein Gemisch aus

15 % p-trans-4-Propylcyclohexyl-benzonitril,
5 % 4-Ethyl-4′-cyanbiphenyl,
5 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
13 % trans-1-p-Methoxyphenyl-4-propylcyclohexan,
10 % trans-1-p-Ethoxyphenyl-4-propylcyclohexan,
10 % trans-1-p-Butoxyphenyl-4-propylcyclohexan,
5 % 4,4′-Bis-(trans-4-propylcyclohexyl)-biphenyl,
5 % 4,4′-Bis-(trans-4-propylcyclohexyl)-2-fluorbiphenyl,
5 % 4,4′-Bis-(trans-4-pentylcyclohexyl)-biphenyl,
5 % 4,4′-Bis-(trans-4-pentylcyclohexyl)-2-fluorbiphenyl,
5 % 4-(trans-4-Pentylcyclohexyl)-4′-(trans-4-propylcyclohexyl)-biphenyl und
5 % 4-(trans-4-Pentylcyclohexyl)-4′-(trans-4-propylcyclohexyl)-2-fluorbiphenyl
zeigt Klp. 88°, Δn 0,1378 und günstige Schaltzeiten.

Beispiel 11

Ein Gemisch aus

17 % p-trans-4-Propylcyclohexyl-benzonitril,
4 % 4-Ethyl-4′-cyanbiphenyl,

4 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
13 % trans-1-p-Methoxyphenyl-4-propylcyclohexan,
10 % trans-1-p-Ethoxyphenyl-4-propylcyclohexan,
9 % trans-1-p-Butoxyphenyl-4-propylcyclohexan,
5 % 4,4′-Bis-(trans-4-propylcyclohexyl)-biphenyl,
5 % 4,4′-Bis-(trans-4-propylcyclohexyl)-2-fluorbiphenyl,
5 % 4,4′-Bis-(trans-4-pentylcyclohexyl)-biphenyl,
5 % 4,4′-Bis-(trans-4-pentylcyclohexyl)-2-fluorbiphenyl,
6 % 4-(trans-4-Pentylcyclohexyl)-4′-(trans-4-propylcyclohexyl)-biphenyl und
5 % 4-(trans-4-Pentylcyclohexyl)-4′-(trans-4-propylcyclohexyl)-2-fluorbiphenyl
zeigt Klp. 91°, Δn 0,1393, Schw. 1,9 V und günstige Schaltzeiten.

Beispiel 12

Ein Gemisch aus

4 % p-Ethylbenzoesäure-(3-fluor-4-cyanphenylester),
5 % p-Propylbenzoesäure-(3-fluor-4-cyanphenylester),
5 % p-Pentylbenzoesäure-(3-fluor-4-cyanphenylester),
4 % p-(trans-4-Propylcyclohexyl)-benzosäure-(3-fluor-4-cyanphenylester),
4 % p-(trans-4-Pentylcyclohexyl)-benzosäure-(3-fluor-4-cyanphenylester),
16 % trans-1-p-Methoxyphenyl-4-propylcyclohexan,
15 % trans-1-p-Ethoxyphenyl-4-propylcyclohexan,
15 % trans-1-p-Butoxyphenyl-4-propylcyclohexan,
12 % 4-Ethyl-4′-(trans-4-propylcyclohexyl)-biphenyl,
5 % 4,4′-Bis-(trans-4-propylcyclohexyl)-biphenyl,
5 % 4,4′-Bis-(trans-4-propylcyclohexyl)-2-fluorbiphenyl,
5 % 4-(trans-4-Pentylcyclohexyl)-4′-(trans-4-propylcyclohexyl)-biphenyl und
5 % 4-(trans-4-Pentylcyclohexyl)-4′-(trans-4-propylcyclohexyl)-2-fluorbiphenyl
zeigt Klp. 96°, Δn 0,1337, Schw. 1,9 V und günstige Schaltzeiten.

Beispiel 13

Ein Gemisch aus

5 % p-Ethylbenzoesäure-(3-fluor-4-cyanphenylester),
5 % p-Propylbenzoesäure-(3-fluor-4-cyanphenylester),
5 % p-Pentylbenzoesäure-(3-fluor-4-cyanphenylester),
4 % p-(trans-4-Propylcyclohexyl)-benzosäure-(3-fluor-4-cyanphenylester),
4 % p-(trans-4-Pentylcyclohexyl)-benzosäure-(3-fluor-4-cyanphenylester), .
17 % trans-1-p-Methoxyphenyl-4-propylcyclohexan,
15 % trans-1-p-Ethoxyphenyl-4-propylcyclohexan,
15 % trans-1-p-Butoxyphenyl-4-propylcyclohexan,
11 % 4-Ethyl-4′-(trans-4-propylcyclohexyl)-biphenyl,
4 % 4,4′-Bis-(trans-4-propylcyclohexyl)-biphenyl,
5 % 4,4′-Bis-(trans-4-propylcyclohexyl)-2-fluorbiphenyl,
5 % 4-(trans-4-Pentylcyclohexyl)-4′-(trans-4-propylcyclohexyl)-biphenyl und
5 % 4-(trans-4-Pentylcyclohexyl)-4′-(trans-4-propylcyclohexyl)-2-fluorbiphenyl
zeigt Klp. 91°, Δn 0,1317, Schw. 1,8 V und günstige Schaltzeiten.

Beispiel 14

Ein Gemiscaus

9 % p-trans-4-Propylcyclohexyl-benzonitril,

9 % 4-Ethyl-4′-cyanbiphenyl,
7 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
16 % trans-1-p-Methoxyphenyl-4-propylcyclohexan,
4 % trans-4-(trans-4-Propylcyclohexyl)-cyclohexancarbonsäure-p-propylphenylester,
4 % träns-4-(trans-4-Propylcyclohexyl)-cyclohexancarbonsäure-p-pentylphenylester,
4 % trans-4-(trans-4-Butylcyclohexyl)-cyclohexancarbonsäure-p-propylphenylester,
4 % trans-4-(trans-4-Butylcyclohexyl)-cyclohexancarbonsäure-p-pentylphenylester,
5 % 1-[trans-4-(trans-4-Propylcyclohexyl)-cyclohexyl]-2-(p-propylphenyl)-ethan,
5 % 1-[trans-4-(trans-4-Pentylcyclohexyl)-cyclohexyl]-2-(p-propylphenyl)-ethan,
11 % trans-4-Butylcyclohexancarbonsäure-(p-trans-4-propylcyclohexylphenylester) und
10 % trans-4-Pentylcyclohexancarbonsäure-(p-trans-4-propylcyclohexylphenylester)
zeigt Klp. 90° und günstige Schaltzeiten.

Beispiel 15

Ein Gemisch aus

9 % p-trans-4-Propylcyclohexyl-benzonitril,
9 % 4-Ethyl-4′-cyanbiphenyl,
7 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
16 % trans-1-p-Methoxyphenyl-4-propylcyclohexan,
3 % trans-4-(trans-4-Propylcyclohexyl)-cyclohexancarbonsäure-p-propylphenylester,
3 % trans-4-(trans-4-Propylcyclohexyl)-cyclohexancarbonsäure-p-pentylphenylester,
3 % trans-4-(trans-4-Butylcyclohexyl)-cyclohexancarbonsäure-p-propylphenylester,
3 % trans-4-(trans-4-Butylcyclohexyl)-cyclohexancarbonsäure-p-pentylphenylester,
6 % 1-[trans-4-(trans-4-Propylcyclohexyl)-cyclohexyl]-2-(p-propylphenyl)-ethan,
5 % 1-[trans-4-(trans-4-Pentylcyclohexyl)-cyclohexyl]-2-(p-propylphenyl)-ethan,
12 % trans-4-Butylcyclohexancarbonsäure-(p-trans-4-propylcyclohexylphenylester) und
12 % trans-4-Pentylcyclohexancarbonsäure-(p-trans-4-propylcyclohexylphenylester)
zeigt Klp. 91° und günstige Schaltzeiten.

Beispiel 16

Ein Gemisch aus

4 % p-(trans-4-Propylcyclohexyl)-benzoesäure-(3-fluor-4-cyanphenylester),
4 % p-(trans-4-Pentylcyclohexyl)-benzoesäure-(3-fluor-4-cyanphenylester),
14 % trans-1-p-Propylphenyl-4-pentylcyclohexan,
5 % p-Propylbenzoesäure-(3-fluor-4-cyanphenylester),
5 % p-Pentylbenzoesäure-(3-fluor-4-cyanphenylester),
5 % p-Ethylbenzoesäure-(3-fluor-4-cyanphenylester),
18 % trans-1-p-Methoxyphenyl-4-propylcyclohexan,
5 % trans-4-(trans-4-Propylcyclohexyl)-cyclohexancarbonsäure-p-propylphenylester,
5 % trans-4-(trans-4-Propylcyclohexyl)-cyclohexancarbonsäure-p-pentylphenylester,
5 % trans-4-(trans-4-Butylcyclohexyl)-cyclohexancarbonsäure-p-propylphenylester,
5 % trans-4-(trans-4-Butylcyclohexyl)-cyclohexancarbonsäure-p-pentylphenylester,
5 % 1-[trans-4-(trans-4-Propylcyclohexyl)-cyclohexyl]-2-(p-propylphenyl)-ethan,
5 % 1-[trans-4-(trans-4-Pentylcyclohexyl)-cyclohexyl]-2-(p-propylphenyl)-ethan,
8 % trans-4-Butylcyclohexancarbonsäure-(p-trans-4-propylcyclohexylphenylester) und
7 % trans-4-Pentylcyclohexancarbonsäure-(p-trans-4-propylcyclohexylphenylester)
zeigt Klp. 93° und günstige Schaltzeiten.

Beispiel 17

Ein Gemisch aus

11 % p-trans-4-Propylcyclohexyl-benzonitril,
8 % 4-Ethyl-4′-cyanbiphenyl,
6 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
16 % trans-1-p-Methoxyphenyl-4-propylcyclohexan,
5 % trans-4-(trans-4-Propylcyclohexyl)-cyclohexancarbonsäure-p-propylphenylester,
5 % trans-4-(trans-4-Propylcyclohexyl)-cyclohexancarbonsäure-p-pentylphenylester,
5 % trans-4-(trans-4-Butylcyciohexyl)-cyclohexancarbonsäure-p-propylphenylester,
5 % trans-4-(trans-4-Butylcyclohexyl)-cyclohexancarbonsäure-p-pentylphenylester,
5 % 1-[trans-4-(trans-4-Propylcyclohexyl)-cyclohexyl]-2-(p-propylphenyl)-ethan,
5 % 1-[trans-4-(trans-4-Pentylcyclohexyl)-cyclohexyl]-2-(p-propylphenyl)-ethan,
9 % trans-4-Butylcyclohexancarbonsäure-(p-trans-4-propylcyclohexylphenylester) und
8 % trans-4-Pentylcyclohexancarbonsäure-(p-trans-4-propylcyclohexylphenylester)
zeigt Klp. 91° und günstige Schaltzeiten.

Beispiel 18

Ein Gemisch aus

12 % p-trans-4-Propylcyclohexyl-benzonitril,
8 % p-trans-4-Butylcyclohexyl-benzonitril,
7 % 4-Ethyl-4′-cyanbiphenyl,
7 % trans-1-p-Butoxyphenyl-4-propylcyclohexan,
7 % trans-1-p-Ethoxyphenyl-4-butylcyclohexan,
7 % trans-1-p-Methoxyphenyl-4-pentylcyclohexan,
10 % trans-1-p-Ethoxyphenyl-4-propylcyclohexan,
5 % trans-4-(trans-4-Propylcyclohexyl)-cyclohexancarbonsäure-p-propylphenylester,
5 % trans-4-(trans-4-Propylcyclohexyl)-cyclohexancarbonsäure-p-pentylphenylester,
5 % trans-4-(trans-4-Butylcyclohexyl)-cyclohexancarbonsäure-p-propylphenylester,
5 % trans-4-(trans-4-Butylcyclohexyl)-cyclohexancarbonsäure-p-pentylphenylester,
5 % 1-(trans-4-(trans-4-Propylcyclohexyl)-cyclohexyl]-2-(p-propylphenyl)-ethan,
4 % 1-(trans-4-(trans-4-Pentylcyclohexyl)-cyclohexyl]-2-(p-propylphenyl)-ethan,
4 % trans-4-Butylcyclohexancarbonsäure-(p-trans-4-propylcyclohexylphenylester),
4 % trans-4-Pentylcyclohexancarbonsäure-(p-trans-4-propylcyclohexylphenylester) und
5 % 4-(trans-4-Pentylcyclohexyl)-4′-(trans-4-propylcyclohexyl)-biphenyl
zeigt Klp. 90° und günstige Schaltzeiten.

Beispiel 19

Ein Gemisch aus

11 % p-trans-4-Propylcyclohexyl-benzonitril,
9 % 4-Ethyl-4′-cyanbiphenyl,
6 % 4-Propyl-4′-cyanbiphenyl,
6 % 4-Butyl-4′-cyanbiphenyl,
13 % trans-1-p-Ethoxyphenyl-4-propylcyclohexan,
10 % trans-1-p-Butoxyphenyl-4-propylcyclohexan,
5 % trans-4-(trans-4-Propylcyclohexyl)-cyclohexancarbonsäure-p-propylphenylester,
5 % trans-4-(trans-4-Propylcyclohexyl)-cyclohexancarbonsäure-p-pentylphenylester,
5 % trans-4-(trans-4-Butylcyclohexyl)-cyclohexancarbonsäure-p-propylphenylester,
5 % trans-4-(trans-4-Butylcyclohexyl)-cyclohexancarbonsäure-p-pentylphenylester,
4 % 1-[trans-4-(trans-4-Propylcyclohexyl)-cyclohexyl]-2-(p-propylphenyl)-ethan,

4 % 1-[trans-4-(trans-4-Pentylcyclohexyl)-cyclohexyl]-2-(p-propylphenyl)-ethan,
6 % trans-4-Butylcyclohexancarbonsäure-(p-trans-4-propylcyclohexylphenylester),
6 % trans-4-Pentylcyclohexancarbonsäure-(p-trans-4-propylcyclohexylphenylester) und
5 % 4-(trans-4-Pentylcyclohexyl)-4′-(trans-4-propylcyclohexyl)-biphenyl
zeigt Klp. 95° und günstige Schaltzeiten.

Beispiel 20

Ein Gemisch aus

9 % p-trans-4-Propylcyclohexyl-benzonitril,
9 % 4-Ethyl-4′-cyanbiphenyl,
7 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
16 % trans-1-p-Ethoxyphenyl-4-propylcyclohexan,
5 % trans-4-(trans-4-Propylcyclohexyl)-cyclohexancarbonsäure-p-propylphenylester,
5 % trans-4-(trans-4-Propylcyclohexyl)-cyclohexancarbonsäure-p-pentylphenylester,
5 % trans-4-(trans-4-Butylcyclohexyl)-cyclohexancarbonsäure-p-propylphenylester,
5 % trans-4-(trans-4-Butylcyclohexyl)-cyclohexancarbonsäure-p-pentylphenylester,
5 % 1-[trans-4-(trans-4-Propylcyclohexyl)-cyclohexyl]-2-(p-propylphenyl)-ethan,
5 % 1-[trans-4-(trans-4-Pentylcyclohexyl)-cyclohexyl]-2-(p-propylphenyl)-ethan,
9 % trans-4-Butylcyclohexancarbonsäure-(p-trans-4-propylcyclohexylphenylester) und
8 % trans-4-Pentylcyclohexancarbonsäure-(p-trans-4-propylcyclohexylphenylester)
zeigt Klp. 94° und günstige Schaltzeiten.

Beispiel 21

Ein Gemisch aus

9 % p-trans-4-Propylcyclohexyl-benzonitril,
9 % 4-Ethyl-4′-cyanbiphenyl,
7 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
16 % trans-1-p-Methoxyphenyl-4-propylcyclohexan,
5 % trans-4-(trans-4-Propylcyclohexyl)-cyclohexancarbonsäure-p-propylphenylester,
5 % trans-4-(trans-4-Propylcyclohexyl)-cyclohexancarbonsäure-p-pentylphenylester,
5 % trans-4-(trans-4-Butylcyclohexyl)-cyclohexancarbonsäure-p-propylphenylester,
5 % trans-4-(trans-4-Butylcyclohexyl)-cyclohexancarbonsäure-p-pentylphenylester,
5 % 1-[trans-4-(trans-4-Propylcyclohexyl)-cyclohexyl]-2-(p-propylphenyl)-ethan,
5 % 1-[trans-4-(trans-4-Pentylcyclohexyl)-cyclohexyl]-2-(p-propylphenyl)-ethan,
9 % trans-4-Butylcyclohexancarbonsäure-(p-trans-4-propylcyclohexylphenylester) und
8 % trans-4-Pentylcyclohexancarbonsäure-(p-trans-4-propylcyclohexylphenylester)
zeigt Klp. 90° und günstige Schaltzeiten.

Beispiel 22

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,

6 % 4-(trans-4-Pentylcyclohexyl)-4′-(trans-4-propylcyclohexyl)-biphenyl,
10 % trans,trans-4-Propylcyclohexylcyclohexan-4′-carbonsäure-(p-fluorphenylester) und
10 % trans,trans-4-Pentylcyclohexylcyclohexan-4′-carbonsäure-(p-fluorphenylester)
zeigt Klp. 77°; Δn 0,1020; Schw. 1,83 V; $T_{on}$ 104 msec und $T_{off}$ 18 msec.

Beispiel 23

Ein Gemisch aus

20 % p-trans-4-Propylcyclohexyl-benzonitril,
22 % trans-1-p-Methoxyphenyl-4-propylcyclohexan,
16 % trans-1-p-Ethoxyphenyl-4-propylcyclohexan,
11 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclohexyl)-4′-(trans-4-propylcyclohexyl)-biphenyl,
10 % trans,trans-4-Pentyl-4′-(5-propylpyrimidin-2-yl)-cyclohexylcyclohexan und
10 % trans,trans-4-Butyl-4′-(5-propylpyrimidin-2-yl)-cyclohexylcyclohexan
zeigt Klp. 73°; Δn 0,1025; Schw. 2,24 V; $T_{on}$ 135 msec und $T_{off}$ 23 msec.

Beispiel 24

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclohexyl)-4′-(trans-4-propylcyclohexyl)-biphenyl und
20 % trans,trans-4-Butyl-4′-(5-heptylpyrimidin-2-yl)-cyclohexylcyclohexan
zeigt Klp. 70°; Δn 0,1000; Schw. 2,10 V; $T_{on}$ 158 msec und $T_{off}$ 17 msec.

Beispiel 25

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclöhexyl)-4′-(trans-4-propylcyclohexyl)-biphenyl und
20 % trans-5-Pentyl-2-[trans-4-(p-pentylphenyl)cyclohexyl]-1,3-dioxan
zeigt Klp. 65°; Δn 0,1001; Schw. 1,88 V; $T_{on}$ 113 msec und $T_{off}$ 22 msec.

Beispiel 26

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,

6 % 4-(trans-4-Pentylcyclohexyl)-4′-(trans-4-propylcyclohexyl)-biphenyl,
10 % trans-4-[trans-(4-Pentylcyclohexyl)-ethyl]-cyclohexancarbonsäure-[p-(trans-4-propylcyclohexyl)-ethyl]-phenylester und
10 % trans-4-[trans-(4-Pentylcyclohexyl)-ethyl]-cyclohexancarbonsäure-[p-(trans-4-pentylcyclohexyl)-ethyl]-phenylester
zeigt Klp. 88°; Δn 0,1054; Schw. 2,28 V; $T_{on}$ 133 msec und $T_{off}$ 21 msec.

Beispiel 27

Ein Gemish aus

20 % p-trans-4-Propylcyclohexyl-benzonitril,
28 % trans-1-p-Methoxyphenyl-4-propylcyclohexan,
23 % trans-1-p-Ethoxyphenyl-4-propylcyclohexan,
18 % trans-1-p-Butoxyphenyl-4-propylcyclohexan und
11 % 2-[trans-4-(p-Pentylphenyl)-cyclohexyl]-5-(trans-4-pentylcyclohexyl)-trans-1,3-dioxan
zeigt Klp. 42°; Δn 0,0861; Schw. 2,06 V; $T_{on}$ 153 msec und $T_{off}$ 28 msec.

Beispiel 28

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclohexyl)-4′-(trans-4-propylcyclohexyl)-biphenyl und
20 % 1-[trans-4-(trans-4-Propylcyclohexyl)-cyclohexyl]-2-(3-fluor-4-cyanphenyl)-ethan
zeigt Klp. 75°; Δn 0,1100; Schw. 1,52 V; $T_{on}$ 80 msec und $T_{off}$ 26 msec.

Beispiel 29

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclohexyl)-4′-(trans-4-propylcyclohexyl)-biphenyl und
20 % p-[trans-4-(trans-4-Propylcyclohexyl)-cyclohexyl]-benzol
zeigt Klp. 63°; Δn 0,0996; Schw. 2,05 V; $T_{on}$ 110 msec und $T_{off}$ 15 msec.

Beispiel 30

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclohexyl)-4′-(trans-4-propylcyclohexyl)-biphenyl und
20 % 1-[trans-4-(trans-4-Pentylcyclohexyl)-cyclohexyl]-2-(p-methoxyphenyl)-ethan

zeigt günstige Schaltzeiten.

Beispiel 31

Ein Gemisch aus

20 % p-trans-4-Propylcyclohexyl-benzonitril,
20 % trans-1-p-Methoxyphenyl-4-propylcyclohexan,
15 % trans-1-p-Ethoxyphenyl-4-propylcyclohexan,
14 % trans-1-p-Butoxyphenyl-4-propylcyclohexan,
3 % 4,4′-Bis-(trans-4-Propylcyclohexyl)-biphenyl,
2 % 4,4′-Bis-(trans-4-Pentylcyclohexyl)-biphenyl,
6 % 4-(trans-4-Pentylcyclohexyl)-4′-(trans-4-propylcyclohexyl)-biphenyl und
20 % trans,trans-4-Propylcyclohexylcyclohexan-4′-carbonsäure-p-(trans-4-propylcyclohexyl)-phenylester
zeigt Klp. 98°; Δn 0,1082; Schw. 2,45 V; $T_{on}$ 115 msec und $T_{off}$ 13 msec.

Beispiel 32

Ein Gemisch aus

20 % p-trans-4-Propylcyclohexyl-benzonitril,
21 % trans-1-p-Methoxyphenyl-4-propylcyclohexan,
16 % trans-1-p-Ethoxyphenyl-4-propylcyclohexan,
15 % trans-1-p-Butoxyphenyl-4-propylcyclohexan,
20 % trans,trans-4-Propylcyclohexylcyclohexan-4′-carbonsäure-p-(trans-4-propylcyclohexyl)-phenylester und
8 % trans,trans-4-Propylcyclohexylcyclohexan-4′-carbonsäure-p-pentylphenylester
zeigt Klp. 82°; Δn 0,0982; Schw. 2,25 V; $T_{on}$ 128 msec und $T_{off}$ 18 msec.

Beispiel 33

Ein Gemisch aus

11 % p-trans-4-Propylcylohexyl-benzonitril,
8 % 4-Ethyl-4′-cyanbiphenyl,
6 % 4-Propyl-4′-cyanbiphenyl,
4 % p-Propylbenzoesäure-(3-fluor-4-cyanphenylester),
4 % p-Pentylbenzoesäure-(3-fluor-4-cyanphenylester),
4 % p-Heptylbenzoesäure-(3-fluor-4-cyanphenylester),
19 % trans-1-p-Methoxyphenyl-4-propylcyclohexan,
5 % trans,trans-4-Propylcyclohexylcyclohexan-4′-carbonsäure-p-propylphenylester,
4 % trans,trans-4-Propylcyclohexylcyclohexan-4′-carbonsäure-p-pentylphenylester,
4 % trans,trans-4-Butylcyclohexylcyclohexan-4′-carbonsäure-p-pentylphenylester,
4 % trans,trans-4-Butylcyclohexylcyclohexan-4′-carbonsäure-p-propylphenylester,
5 % 1-[trans-4-(trans-4-Propylcyclohexyl)-cyclohexyl]2-(p-propylphenyl)-ethan,
5 % 1-[trans-4-(trans-4-Propylcyclohexyl)-cyclohexyl]2-(p-pentylphenyl)-ethan,
6 % trans-4-Butylcyclohexancarbonsäure-(p-trans-4-propylcyclohexylphenylester),
5 % trans-4-Pentylcyclohexancarbonsäure-(p-trans-4-propylcyclohexylphenylester) und
6 % 4-(trans-4-Pentylcyclohexyl)-4′-(trans-4-propylcyclohexyl)-2-fluorbiphenyl
zeigt Klp. 90°; Δn 0,1259, Schw. 1,8 V und günstige Schaltzeiten.

Beispiel 34

Ein Gemisch aus

12 % p-trans-4-Propylcylohexyl-benzonitril,
8 % p-trans-4-Butylcyclohexyl-benzonitril,
13 % trans-1-p-Ethoxyphenyl-4-propylcyclohexan,

11 % trans-1-p-Butoxyphenyl-4-propylcyclohexan,
8 % trans-1-p-Ethoxyphenyl-4-butylcyclohexan,
9 % trans-1-p-Methoxyphenyl-4-pentylcyclohexan,
5 % trans-1-p-Ethoxyphenyl-4-pentylcyclohexan,
5 % trans,trans-4-Propylcyclohexylcyclohexan-4′-carbonsäure-p-propylphenylester,
5 % trans,trans-4-Propylcyclohexylcyclohexan-4′-carbonsäure-p-pentylphenylester,
5 % trans,trans-4-Butylcyclohexylcyclohexan-4′-carbonsäure-p-pentylphenylester,
5 % trans,trans-4-Butylcyclohexylcyclohexan-4′-carbonsäure-p-propylphenylester,
4 % 4,4′-Bis-(trans-4-propylcyclohexyl)-biphenyl,
5 % 4,4′-Bis-(trans-4-pentylcyclohexyl)-biphenyl und
5 % 4-(trans-4-Pentylcyclohexyl)-4′-(trans-4-propylcyclohexyl)-biphenyl
zeigt Klp. 91°; Δn 0,1045, Schw. 2,2 V und günstige Schaltzeiten.

Beispiel 35

Ein Gemisch aus

5 % p-Ethylbenzoesäure-(3-fluor-4-cyanphenylester),
4 % p-Propylbenzoesäure-(3-fluor-4-cyanphenylester),
15 % trans-1-p-Ethoxyphenyl-4-propylcyclohexan,
13 % trans-1-p-Butoxyphenyl-4-propylcyclohexan,
10 % trans-1-p-Ethoxyphenyl-4-butylcyclohexan,
9 % trans-1-p-Methoxyphenyl-4-pentylcyclohexan,
10 % trans,trans-4-Propyl-4′-propoxycyclohexylcyclohexan,
5 % trans,trans-4-Propylcyclohexylcyclohexan-4′-carbonsäure-p-propylphenylester,
5 % trans,trans-4-Propylcyclohexylcyclohexan-4′-carbonsäure-p-pentylphenylester,
5 % trans,trans-4-Butylcyclohexylcyclohexan-4′-carbonsäure-p-pentylphenylester,
5 % trans,trans-4-Butylcyclohexylcyclohexan-4′-carbonsäure-p-propylphenylester, ,
4 % 4,4′-Bis-(trans-4-propylcyclohexyl)-biphenyl,
5 % 4,4′-Bis-(trans-4-pentylcyclohexyl)-biphenyl und
5 % 4-(trans-4-Pentylcyclohexyl)-4′-(trans-4-propylcyclohexyl)-biphenyl
zeigt Klp. 90°, Δn 0,1012, Schw. 2,6 V und günstige Schaltzeiten.

Beispiel 36

Ein Gemisch aus

15 % p-trans-4-Propylcyclohexyl-benzonitril,
10 % p-trans-4-Butylcyclohexyl-benzonitril,
11 % trans-1-p-Ethoxyphenyl-4-propylcyclohexan,
6 % trans-1-p-Butoxyphenyl-4-propylcyclohexan,
14 % trans,trans-4-Propyl-4′-propoxycyclohexylcyclohexan,
6 % trans,trans-4-Pentyl-4′-methoxycyclohexylcyclohexan,
12 % trans,trans-4-Pentyl-4′-ethoxycyclohexylcyclohexan,
4 % 4,4′-Bis-(trans-4-propylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-biphenyl,
4 % 4,4′-Bis-(trans-4-pentylcyclohexyl)-2-fluorbiphenyl,
5 % 4-(trans-4-Pentylcyclohexyl)-4′-(trans-4-propylcyclohexyl)-biphenyl und
5 % 4-(trans-4-Pentylcyclohexyl)-4′-(trans-4-propylcyclohexyl-2-fluorbiphenyl
zeigt Klp. 90°, Δn 0,1003, Schw. 2,4 V und günstige Schaltzeiten.

## Patentansprüche

1. Verwendung von Verbindungen der Formel I,

$$R^1\text{-}A^1\text{-}Z^1\text{-}A\text{-}O\text{-}R^2 \quad I$$

worin

$R^1$ und $R^2$ jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-Cyclohexylen, und

A unsubstituiertes oder durch Fluor substituiertes 1,4-Phenylen

bedeutet, als Komponenten flüssigkristalliner Dielektrika mit mindestens drei flüssigkristallinen Verbindungen zur Verminderung der Einschaltzeit $T_{on}$ von elektrooptischen Anzeigeelementen auf der Basis einer TN-Zelle bei Umschaltung von einer ersten Spannung, die unterhalb oder etwa bei der Schwellen- spannung liegt, auf eine zweite Spannung, die im Anstieg der elektrooptischen Kennlinie liegt.

2. Verfahren zur Verminderung der Einschaltzeit $T_{on}$ von elektrooptischen Anzeigeelementen auf der Basis einer TN-Zelle bei Umschaltung von einer ersten Spannung, die unterhalb oder etwa bei der Schwellenspannung liegt, auf eine zweite Spannung, die im Anstieg der elektrooptischen Kennlinie liegt, dadurch gekennzeichnet, daß das Dielektrikum mindestens eine Komponente der Formel I,

$$R^1\text{-}A^1\text{-}Z^1\text{-}A\text{-}O\text{-}R^2 \quad I$$

worin

$R^1$ und $R^2$ jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-Cyclohexylen, und

A unsubstituiertes oder durch Fluor substituiertes 1,4-Phenylen bedeutet,

enthält.

3. Elektrooptisches Anzeigeelement auf der Basis einer TN-Zelle mit besonders kurzer Einschaltzeit $T_{on}$ bei Umschaltung von einer ersten Spannung, die unterhalb oder etwa bei der Schwellenspannung liegt, auf eine zweite Spannung, die im Anstieg der elektrooptischen Kennlinie liegt, dadurch gekennzeichnet, daß das Dielektrikum mindestens eine Komponente der Formel I,

$$R^1\text{-}A^1\text{-}Z^1\text{-}A\text{-}O\text{-}R^2 \quad I$$

worin

$R^1$ und $R^2$ jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-Cyclohexylen, und

A unsubstituiertes oder durch Fluor substituiertes 1,4-Phenylen bedeutet,

enthält.

4. Elektrooptisches Anzeigeelement auf der Basis einer TN-Zelle mit besonders kurzer Einschaltzeit $T_{on}$ bei Umschaltung von einer ersten Spannung die unterhalb oder etwa bei der Schwellenspannung liegt, auf eine zweite Spannung, die im Anstieg der elektrooptischen kennlinie liegt, dadurch gekennzeichnet, daß das Dielektrikum mindestens gleichzeitig eine Komponente der Formel I,

$$R^1\text{-}A^1\text{-}Z^1\text{-}A\text{-}O\text{-}R^2 \quad I$$

worin

$R^1$ und $R^2$ jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen

$Z^1$ $-CH_2CH_2-$ oder eine Einfachbindung,

$A^1$ trans-1,4-Cyclohexylen, und

A unsubstituiertes oder durch Fluor substituiertes 1,4-Phenylen bedeutet,

und mindestens eine Komponente ausgewählt aus den Verbindungen der Formeln II und III enthält,

$$R^3\text{-}A^2\text{-}Z^2\text{-}A^3\text{-}Z^3\text{-}A'\text{-}R^4 \quad II$$

$$R^3\text{-}A^2\text{-}Z^2\text{-}A'\text{-}Z^3\text{-}A^3\text{-}R^4 \quad III$$

worin

$R^3$ geradkettiges Alkyl mit 2 bis 7 C-Atomen, worin auch eine $CH_2$-Gruppe durch -O- oder ,CH=CH ersetzt sein kann,

$R^4$ H, Alkyl mit 1 bis 9 C-Atomen, worin auch eine oder zwei nicht benachbarte $CH_2$-Gruppen durch -O-, -CO-, -O-CO-, -CO-O- und/oder -CH=CH- ersetzt sein können, Halogen, CN, NCS oder $N_3$ bedeutet,

$Z^2$ und $Z^3$ jeweils $-CH_2CH_2-$, $-OCH_2-$, $-CH_2O-$ -O-CO-, -COO-; oder eine Einfachbindung, wobei mindestens eine der Gruppen $Z^2$ und $Z^3$ eine Einfachbindung ist,

$A^2$ und $A^3$ jeweils trans-1,4-Cyclohexylen, worin auch eine oder zwei nicht benachbarte $CH_2$-Gruppen durch O und/oder S ersetzt sein können, und

A' unsubstituiertes oder durch Fluor substituiertes 1,4-Phenylen bedeutet, worin auch eine oder

zwei CH-Gruppen durch N ersetzt sein können.

5. Anzeigeelement nach Anspruch 3 oder 4, dadurch gekennzeichnet, daß das Dielektrikum mindestens eine Komponente der Formel IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad \text{IV}$$

enthält, worin

$Z^4$ und $Z^5$ jeweils $-CH_2CH_2-$, $-OCH_2-$, $-CH_2O-$, -O-CO-, -CO-O oder eine Einfachbindung,

$A^4$ und $A^5$ jeweils trans-1,4-Cyclohexylen oder unsubstituiertes oder durch Fluor substituiertes 1,4-Phenylen, worin auch eine oder zwei CH-Gruppen durch N ersetzt sein können,

m und n jeweils 0 oder 1 bedeuten,

und $R^3$, $R^4$, $A^2$, $A^3$, A', $Z^2$ und $Z^3$ die in Anspruch 4 angegebene Bedeutung haben.

6. Elektrooptisches Anzeigeelement nach Anspruch 3, 4 oder 5, dadurch gekennzeichnet, daß im ersten Transmissionsminimum nach Gooch-Tarry gearbeitet wird.

7. Anzeigeelement nach Anspruch 4, dadurch gekennzeichnet, daß das Dielektrikum mindestens eine Komponente der folgenden Teilformeln II a bis II v enthält:

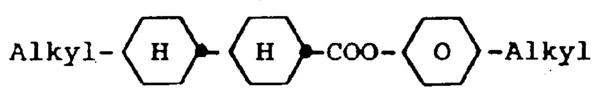
IIa

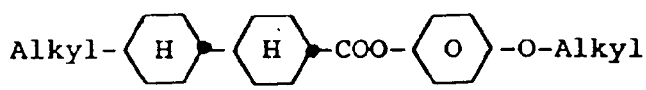
IIb

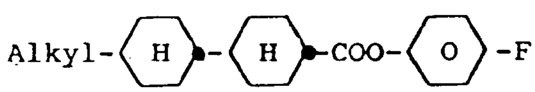
IIc

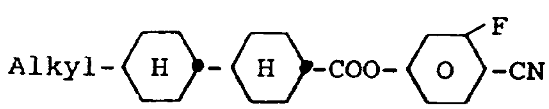
IId

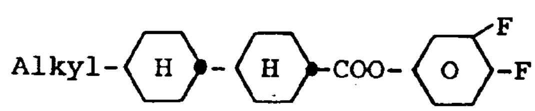
IIe

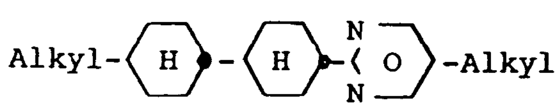
IIf

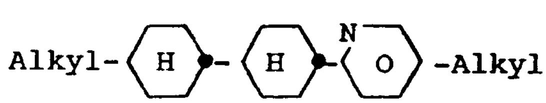
IIg

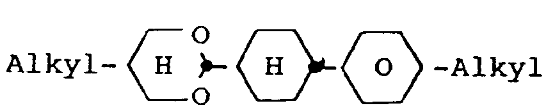
IIh

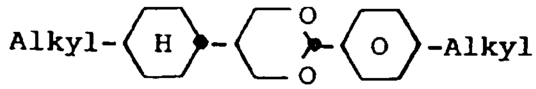

IIi

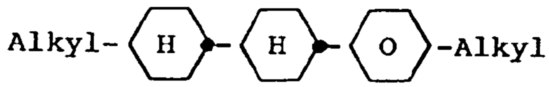

IIj

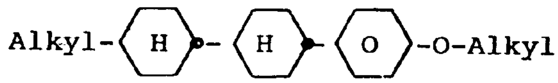

IIk

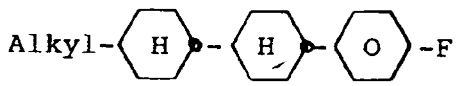

IIl

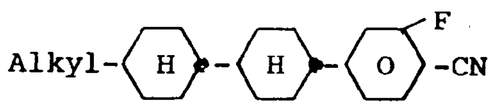

IIm

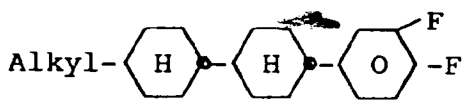

IIn

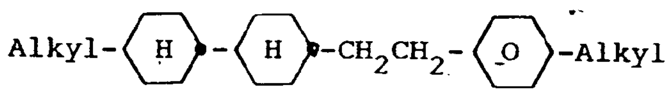

IIo

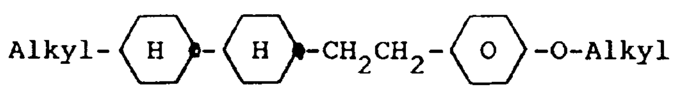

IIp

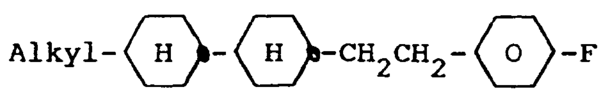

IIq

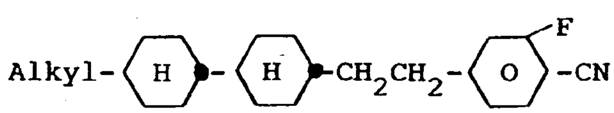

IIr

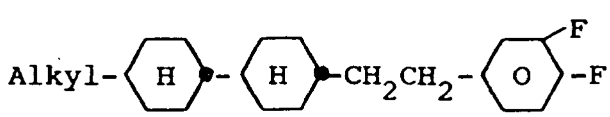

IIs

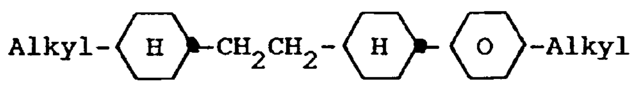 IIt

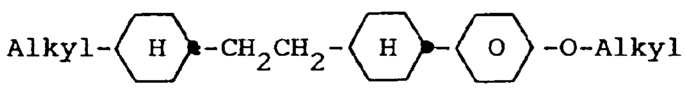 IIu

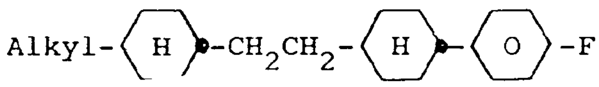 IIv

8. Dielektrikum zur Verwendung in einem elektrooptischen Anzeigeelement auf der Basis einer TN-Zelle mit besonders kurzer Einschaltzeit $T_{on}$ bei Umschaltung von einer ersten Spannung, die unterhalb oder etwa bei der Schwellenspannung liegt, auf eine zweite Spannung, die im Anstieg der elektrooptischen Kennlinie liegt, dadurch gekennzeichnet, daß es gleichzeitig mindestens eine Komponente der Formel I,

$$R^1\text{-}A^1\text{-}Z^1\text{-}A\text{-}O\text{-}R^2 \quad I$$

worin

| | |
|---|---|
| $R^1$ und $R^2$ | jeweils unabhängig voneinander Alkyl mit 1 bis 9 C-Atomen, worin auch eine $CH_2$-Gruppe durch -O- oder -CH=CH- ersetzt sein kann, $R^2$ auch geradkettiges Alkanoyl mit 2 bis 5 C-Atomen |
| $Z^1$ | $-CH_2CH_2-$ oder eine Einfachbindung, |
| $A^1$ | trans-1,4-Cyclohexylen, und |
| A | unsubstituiertes oder durch Fluor substituiertes 1,4-Phenylen bedeutet, |

und mindestens eine Komponente ausgewählt aus den Verbindungen der Formeln II und III enthält,

$$R^3\text{-}A^2\text{-}Z^2\text{-}A^3\text{-}Z^3\text{-}A'\text{-}R^4 \quad II$$

$$R^3\text{-}A^2\text{-}Z^2\text{-}A'\text{-}Z^3\text{-}A^3\text{-}R^4 \quad III$$

worin

| | |
|---|---|
| $R^3$ | H, Alkyl mit 1 bis 9 C-Atomen, worin auch eine oder zwei nicht benachbarte $CH_2$-Gruppen durch -O-, -CO-, -O-CO-, -CO-O- und/oder -CH=CH ersetzt sein können, |
| $R^4$ | H, Alkyl mit 1 bis 9 C-Atomen, worin auch eine oder zwei nicht benachbarte $CH_2$-Gruppen durch -O-, -CO-, -O-CO-, -CO-O- und/oder -CH=CH- ersetzt sein können, Halogen, CN, NCS oder $N_3$ bedeutet, |
| $Z^2$ und $Z^3$ | jeweils $-CH_2CH_2-$, $-OCH_2-$, $-CH_2O-$ -O-CO-, -COO-, oder eine Einfachbindung, |
| $A^2$ und $A^3$ | jeweils trans-1,4-Cyclohexylen, worin auch eine oder zwei nicht benachbarte $CH_2$-Gruppen durch O und/oder S ersetzt sein können, und |
| A′ | unsubstituiertes oder durch Fluor substituiertes 1,4-Phenylen bedeutet, worin auch eine oder zwei CH-Gruppen durch N ersetzt sein können. |

9. Dielektrikum nach Anspruch 8, dadurch gekennzeichnet, daß es mindestens eine Komponente der Formel IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad IV$$

enthält, worin

| | |
|---|---|
| $Z^4$ und $Z^5$ | jeweils $-CH_2CH_2-$, $-OCH_2-$, $-CH_2O-$, -O-CO-, -CO-O oder eine Einfachbindung, |
| $A^4$ und $A^5$ | jeweils trans-1,4-cyclohexylen oder unsubstituiertes oder durch Fluor substituiertes 1,4-Phenylen, worin auch eine oder zwei CH-Gruppen durch N ersetzt sein können, |
| m und n | jeweils 0 oder 1 bedeuten, |

und $R^3$, $R^4$, $A^2$, $A^3$, A′, $Z^2$ und $Z^3$ die in Anspruch 4 angegebene Bedeutung haben.

## Claims

1. Use of compounds of the formula I

$$R^1\text{-}A^1\text{-}Z^1\text{-}A\text{-}O\text{-}R^2 \quad I$$

in which

| | |
|---|---|
| $R^1$ and $R^2$, | independently of one another, are each alkyl having 1 to 9 C atoms, in which, in addition, one $CH_2$ group may be replaced by -O- or -CH=CH-, $R^2$ is also straight-chain alkanoyl having 2 to 5 C atoms |
| $Z^1$ | is $-CH_2CH_2-$ or a single bond, |
| $A^1$ | is trans-1,4-cyclohexylene, and |

A is unsubstituted or fluorine-substituted 1,4-phenylene

as components of liquid-crystalline dielectrics containing at least three liquid-crystalline compounds, for shortening the switch-on time $T_{on}$ of electrooptical display elements based on a TN cell when the voltage is switched from a first voltage below or approximately at the threshold voltage to a second voltage on the increase of the electrooptical characterisitic line.

2. Process for shortening the switch-on time $T_{on}$ of electrooptical display elements based on a TN cell when the voltage is switched from a first voltage below or approximately at the threshold voltage to a second voltage on the increase of the electrooptical characteristic line, characterised in that the dielectric contains at least one component of the formula I

$$R^1\text{-}A^1\text{-}Z^1\text{-}A\text{-}O\text{-}R^2 \quad I$$

in which

$R^1$ and $R^2$, independently of one another, are each alkyl having 1 to 9 C atoms, in which, in addition, one $CH_2$ group may be replaced by -O- or -CH=CH-, $R^2$ is also straight-chain alkanoyl having 2 to 5 C atoms

$Z^1$ is $-CH_2CH_2-$ or a single bond,

$A^1$ is trans-1,4-cyclohexylene, and

A is unsubstituted or fluorine-substituted 1,4-phenylene.

3. Electrooptical display element based on a TN cell having a particularly short switch-on time $T_{on}$ when the voltage is switched from a first voltage below or approximately at the threshold voltage to a second voltage on the increase of the electrooptical characteristic line,characterised in that the dielectric contains at least one component of the formula I

$$R^1\text{-}A^1\text{-}Z^1\text{-}A\text{-}O\text{-}R^2 \quad I$$

in which

$R^1$ and $R^2$, independently of one another, are each alkyl having 1 to 9 C atoms, in which, in addition, one $CH_2$ group may be replaced by -O- or -CH=CH-, $R^2$ is also straight-chain alkanoyl having 2 to 5 C atoms

$Z^1$ is $-CH_2CH_2-$ or a single bond,

$A^1$ is trans-1,4-cyclohexylene, and

A is unsubstituted or fluorine-substituted 1,4-phenylene.

4. Electrooptical display element based on a TN cell having a particularly short switch-on time $T_{on}$ when the voltage is switched from a first voltage below or approximately at the threshold voltage to a second voltage on the increase of the electrooptical characteristic line, characterised in that the dielectric simultaneously contains at least one component of the formula I

$$R^1\text{-}A^1\text{-}Z^1\text{-}A\text{-}O\text{-}R^2 \quad I$$

in which

$R^1$ and $R^2$, independently of one another, are each alkyl having 1 to 9 C atoms, in which, in addition, one $CH_2$ group may be replaced by -O- or -CH=CH-, $R^2$ is also straight-chain alkanoyl having 2 to 5 C atoms

$Z^1$ is $-CH_2CH_2-$ or a single bond,

$A^1$ is trans-1,4-cyclohexylene, and

A is unsubstituted or fluorine-substituted 1,4-phenylene,

and at least one component selected from the compounds of the formulae II and III

$$R^3\text{-}A^2\text{-}Z^2\text{-}A^3\text{-}A'\text{-}R^4 \quad II$$

$$R^3\text{-}A^2\text{-}Z^2\text{-}A'\text{-}Z^3\text{-}A^3\text{-}R^4 \quad III$$

in which

$R^3$ is straight-chain alkyl having 2 to 7 C atoms, in which, in addition, one $CH_2$ group may be replaced by -O- or -CH=CH-,

$R^4$ is H, alkyl having 1 to 9 C atoms in which, in addition, one or two nonadjacent $CH_2$ groups may be replaced by -O-, -CO-, -O-CO-, -CO-O- and/or -CH=CH-, halogen, CN, NCS or $N_3$,

$Z^2$ and $Z^3$ are each $-CH_2CH_2-$, $-OCH_2-$, $-CH_2O-$ -O-CO-, -COO-, or a single bond, at least one of the groups $Z^2$ and $Z^3$ being a single bond,

$A^2$ and $A^3$ are each trans-1,4-cyclohexylene in which, in addition, one or two nonadjacent $CH_2$ groups may be replaced by O and/or S,

A' is unsubstituted or fluorine-substituted 1,4-phenylene in which, in addition, one or two CH groups may be replaced by N.

5. Display element according to Claim 3 or 4, characterised in that the dielectric contains at least one component of the formula IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad IV$$

in which

Z⁴ and Z⁵ -$CH_2CH_2$-, -$OCH_2$-, -$CH_2O$-, -O-CO-, -CO-O- or a single bond,

$A^4$ and $A^5$ are each trans-1,4-cyclohexylene or unsubstituted or fluorine-substituted 1,4-phenylene in which, in addition, one or two CH groups may be replaced by N,

m and n are each 0 or 1,

and $R^3$, $R^4$, $A^2$, $A^3$, A′, $Z^2$ and $Z^3$ have the meaning given in claim 4.

6. Electrooptical display element according to Claim 3, 4 or 5, characterised in that operation is in the first transmission minimum according to Gooch-Tarry.

7. Display element according to Claim 4, characterised in that the dielectric contains at least one component of the following part-formulae IIa to IIv:

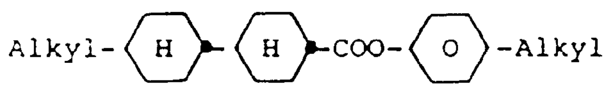
IIa

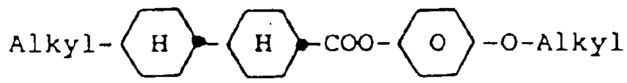
IIb

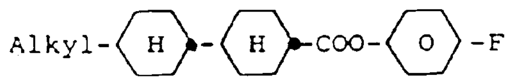
IIc

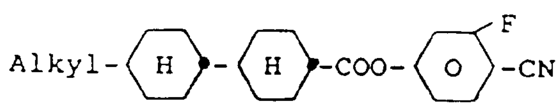
IId

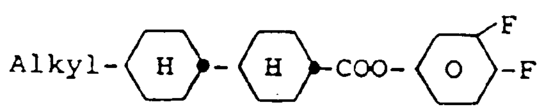
IIe

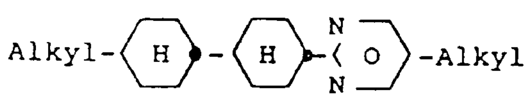
IIf

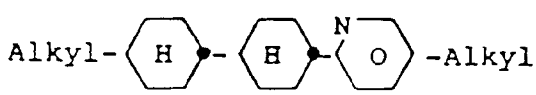
IIg

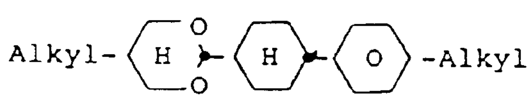
IIh

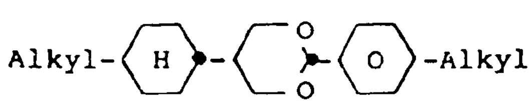
IIi

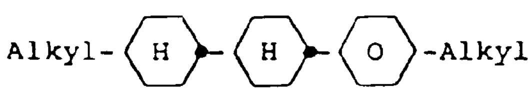
IIj

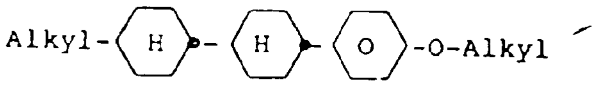 IIk

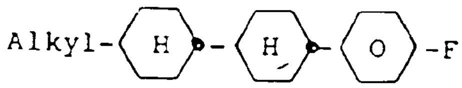 IIl

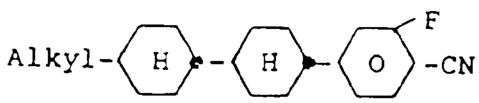 IIm

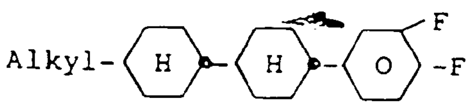 IIn

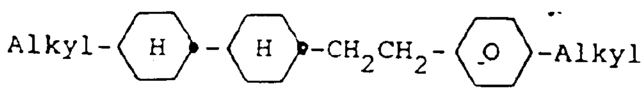 IIo

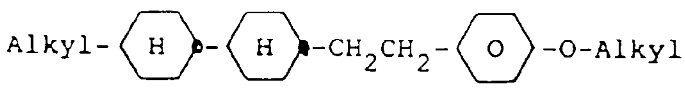 IIp

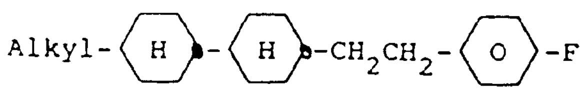 IIq

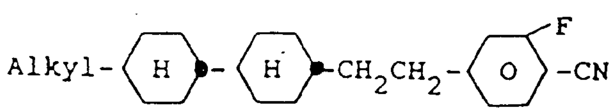 IIr

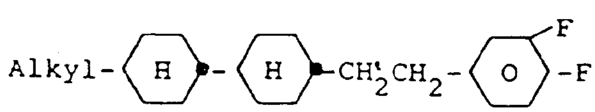 IIs

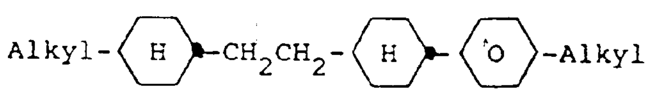 IIt

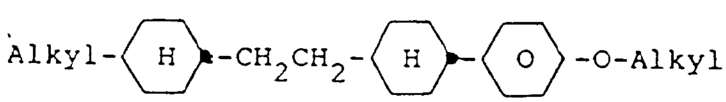 IIu

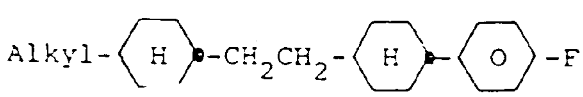 IIv

8. Dielectric for use in an electrooptical display element based on a TN cell having a particularly short switch-on time $T_{on}$ when the voltage is switched from a first voltage below or approximately at the threshold voltage to a second voltage on the increase of the electrooptical characteristic line, characterised in that it simultaneously contains one component of the formula I

$$R^1\text{-}A^1\text{-}Z^1\text{-}A\text{-}O\text{-}R^2 \quad I$$

in which

| | |
|---|---|
| $R^1$ and $R^2$, | independently of one another, are each alkyl having 1 to 9 C atoms, in which, in addition, one $CH_2$ group may be replaced by -O- or -CH=CH-, $R^2$ is also straight-chain alkanoyl having 2 to 5 C atoms |
| $Z^1$ | is $-CH_2CH_2-$ or a single bond, |
| $A^1$ | is trans-1,4-cyclohexylene, and |
| A | is unsubstituted or fluorine-substituted 1,4-phenylene, |

and at least one component selected from the compounds of the formulae II and III

$$R^3\text{-}A^2\text{-}Z^2\text{-}A^3\text{-}A'\text{-}R^4 \quad II$$

$$R^3\text{-}A^2\text{-}Z^2\text{-}A'\text{-}Z^3\text{-}A^3\text{-}R^4 \quad III$$

in which

| | |
|---|---|
| $R^3$ | is H or alkyl having 1 to 9 C atoms, in which, in addition, one or two nonadjacent $CH_2$ groups may be replaced by -O-, -CO-, -O-CO-, -CO-O- and/or -CH=CH-, |
| $R^4$ | is H, alkyl having 1 to 9 C atoms in which, in addition, one or two nonadjacent $CH_2$ groups may be replaced by -O-, -CO-, -O-CO-, -CO-O- and/or -CH=CH-, halogen, CN, NCS or $N_3$, |
| $Z^2$ and $Z^3$ | are each $-CH_2CH_2-$, $-OCH_2-$, $-CH_2O-$ -O-CO-, -CO-O-, or a single bond, |
| $A^2$ and $A^3$ | are each trans-1,4-cyclohexylene in which, in addition, one or two nonadjacent $CH_2$ groups may be replaced by O and/or S, |
| A′ | is unsubstituted or fluorine-substituted 1,4-phenylene in which, in addition, one or two CH groups may be replaced by N. |

9. Dielectric according to Claim 8, characterised in that it contains at least one component of the formula IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad IV$$

in which

| | |
|---|---|
| $Z^4$ and $Z^5$ | $-CH_2CH_2-$, $-OCH_2-$, $-CH_2O-$, -O-CO-, -CO-O- or a single bond, |
| $A^4$ and $A^5$ | are each trans-1,4-cyclohexylene or unsubstituted or fluorine-substituted 1,4-phenylene in which, in addition, one or two CH groups may be replaced by N, |
| m and n | are each 0 or 1, |

and $R^3$, $R^4$, $A^2$, $A^3$, A′, $Z^2$ and $Z^3$ have the meaning given in Claim 4.

## Revendications

1. Utilisation de composés de formule I

$$R^1\text{-}A^1\text{-}Z^1\text{-}A\text{-}O\text{-}R^2 \quad I$$

dans laquelle

| | |
|---|---|
| $R^1$ et $R^2$ | représentent chacun, indépendamment l'un de l'autre, un groupe alkyle en C 1-C 9 dans lequel un groupe $CH_2$ peut être remplacé par -O- ou -CH=CH-, $R^2$ pouvant également représenter un groupe alcanoyle à chaîne droite en C 2-C 5, |
| $Z^1$ | représente $-CH_2CH_2-$ ou une liaison simple, |
| $A^1$ | représente un groupe trans-1,4-cyclohexylène, et |
| A | représente un groupe 1,4-phénylène non substitué ou substitué par le fluor, |

en tant que composants de diélectriques à cristaux liquides à au moins trois composés à cristaux liquides, en vue d'écourter le temps de mise en circuit $T_{on}$ d'éléments d'affichage électro-optiques à base d'une cellule TN à la commutation d'une première tension située au-dessous ou au voisinage de la tension de seuil, à une deuxième tension située dans la partie montante de la caractéristique électro-optique.

2. Procédé pour écourter le temps de mise en circuit $T_{on}$ d'éléments d'affichage électro-optiques à base d'une cellule TN à la commutation d'une première tension située au-dessous ou au voisinage de la tension de seuil, à une deuxième tension située dans la partie montante de la caractéristique électro-optique, caractérisé en ce que le diélectrique contient au moins un composant de formule I

$$R^1\text{-}A^1\text{-}Z^1\text{-}A\text{-}O\text{-}R^2 \quad I$$

dans laquelle

| | |
|---|---|
| $R^1$ et $R^2$ | représentent chacun, indépendamment l'un de l'autre, un groupe alkyle en C 1-C 9 dans lequel |

un groupe $CH_2$ peut être remplacé par -O- ou -CH=CH-, $R^2$ pouvant également représenter un groupe alcanoyle à chaîne droite en C 2-C 5,

$Z^1$ représente $-CH_2CH_2-$ ou une liaison simple,

$A^1$ représente un groupe trans-1,4-cyclohexylène, et

A représente un groupe 1,4-phénylène non substitué ou substitué par le fluor.

3. Eléments d'affichage électro-optiques à base d'une cellule TN à temps de mise en circuit $T_{on}$ particulièrement court à la commutation d'une première tension située au-dessous ou au voisinage de la tension de seuil, à une deuxième tension située dans la partie montante de la caractéristique électro-optique, caractérisés en ce que le diélectrique contient au moins un composant de formule I

$$R^1\text{-}A^1\text{-}Z^1\text{-}A\text{-}O\text{-}R^2 \quad I$$

dans laquelle

$R^1$ et $R^2$ représentent chacun, indépendamment l'un de l'autre, un groupe alkyle en C 1-C 9 dans lequel un groupe $CH_2$ peut être remplacé par -O- ou -CH=CH-, $R^2$ pouvant également représenter un groupe alcanoyle à chaîne droite en C 2-C 5,

$Z^1$ représente $-CH_2CH_2-$ ou une liaison simple,

$A^1$ représente un groupe trans-1,4-cyclohexylène, et

A représente un groupe 1,4-phénylène non substitué ou substitué par le fluor.

4. Eléments d'affichage électro-optiques à base d'une cellule TN à temps de mise en circuit $T_{on}$ particulièrement court à la commutation d'une première tension située au-dessous ou au voisinage de la tension de seuil, à une deuxième tension située dans la partie montante de la caractéristique électro-optique, caractérisés en ce que le diélectrique contient au moins, simultanément, un composant de formule I

$$R^1\text{-}A^1\text{-}Z^1\text{-}A\text{-}O\text{-}R^2 \quad I$$

dans laquelle

$R^1$ et $R^2$ représentent chacun, indépendamment l'un de l'autre, un groupe alkyle en C 1-C 9 dans lequel un groupe $CH_2$ peut être remplacé par -O- ou -CH=CH-, $R^2$ pouvant également représenter un groupe alcanoyle à chaîne droite en C 2-C 5,

$Z^1$ représente $-CH_2CH_2-$ ou une liaison simple,

$A^1$ représente un groupe trans-1,4-cyclohexylène, et

A représente un groupe 1,4-phénylène non substitué ou substitué par le fluor,

et au moins un composant choisi parmi les composés de formules II et III

$$R^3\text{-}A^2\text{-}Z^2\text{-}A^3\text{-}Z^3\text{-}A'\text{-}R^4 \quad II$$

$$R^3\text{-}A^2\text{-}Z^2\text{-}A'\text{-}Z^3\text{-}A^3\text{-}R^4 \quad III$$

dans lesquelles

$R^3$ représente un groupe alkyle à chaîne droite en C 2-C 7 dans lequel un groupe $CH_2$ peut être remplacé par -O-ou -CH=CH-,

$R^4$ représente H, un groupe alkyle en C 1-C 9 dans lequel un ou deux groupes $CH_2$ non voisins peuvent être remplacés par -O-, -CO-, -O-CO-, -CO-O- et/ou -CH=CH-, un halogène, un groupe CN, NCS ou $N_3$,

$Z^2$ et $Z^3$ représentent chacun $-CH_2CH_2-$, $-OCH_2-$, $-CH_2O-$, -O-CO-, -COO- ou une liaison simple, l'un au moins des symboles $Z^2$ et $Z^3$ devant représenter une liaison simple,

$A^2$ et $A^3$ représentent chacun un groupe trans-1,4-cyclohexylène dans lequel un ou deux groupes $CH_2$ non voisins peuvent être remplacés par O et/ou S, et

A' représente un groupe 1,4-phénylène non substitué ou substitué par le fluor et dans lequel également un ou deux groupes CH peuvent être remplacés par N.

5. Eléments d'affichage selon la revendication 3 ou 4, caractérisés en ce que le diélectrique contient au moins un composant de formule IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad IV$$

dans laquelle

$Z^4$ et $Z^5$ représentent chacun $-CH_2CH_2-$, $-OCH_2-$, $-CH_2O-$, -O-CO-, -CO-O- ou une liaison simple,

$A^4$ et $A^5$ représentent chacun un groupe trans-1,4-cyclohexylène ou un groupe 1,4-phénylène non substitué ou substitué par le fluor et dans lequel également un ou deux groupes CH peuvent être remplacés par N,

m et n sont égaux chacun à 0 ou 1,

et $R^3$, $R^4$, $A^2$, $A^3$, A', $Z^2$ et $Z^3$ ont les significations indiquées dans la revendication 4.

6. Eléments d'affichage électro-optiques selon la revendication 3, 4 ou 5, caractérisés en ce que l'on opère dans le premier minimum de transmission selon Gooch-Tarry.

7. Eléments d'affichage selon la revendication 4, caractérisés en ce que le diélectrique contient au moins un composant répondant à l'une des formules partielles IIa à IIv ci-après :

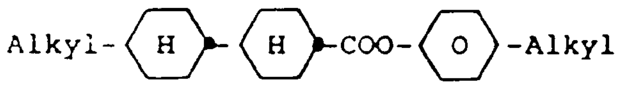

IIa

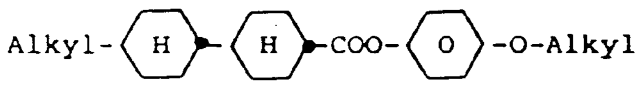

IIb

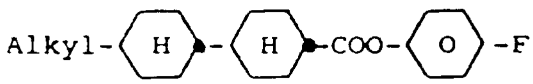

IIc

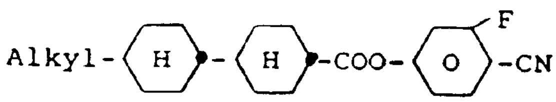

IId

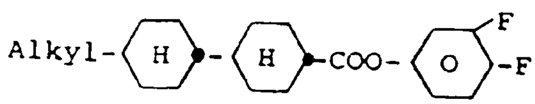

IIe

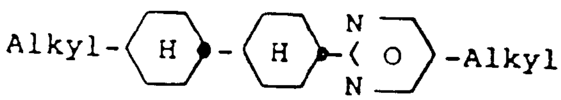

IIf

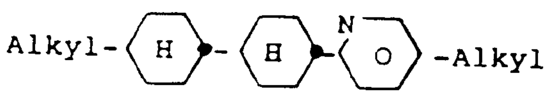

IIg

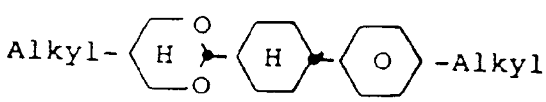

IIh

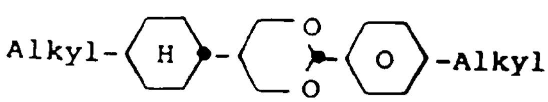

IIi

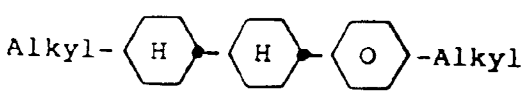

IIj

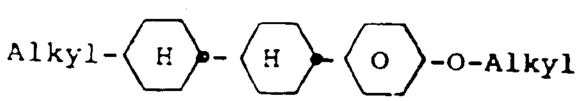

IIk

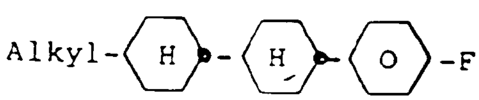

IIl

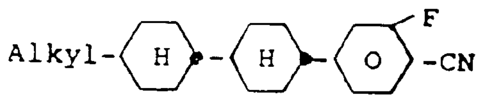

IIm

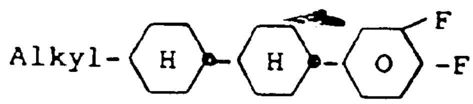

IIn

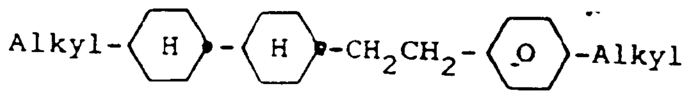

IIo

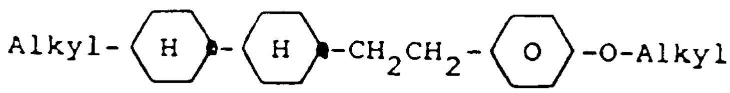

IIp

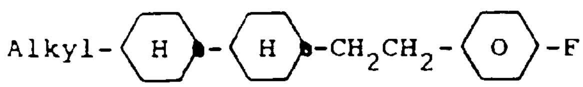

IIq

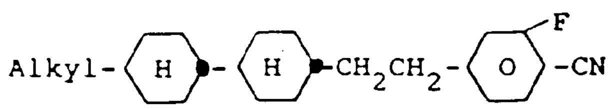

IIr

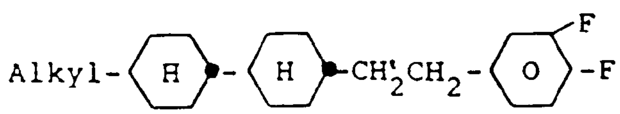

IIs

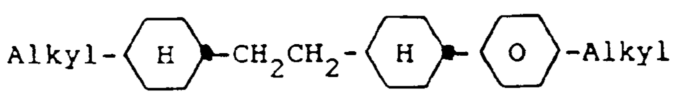

IIt

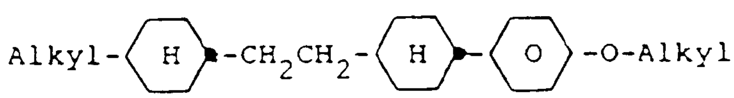

IIu

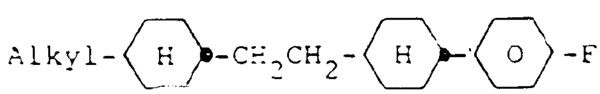

IIv

8. Diélectrique destiné à être utilisé dans un élément d'affichage électro-optique à base d'une cellule TN à temps de mise en circuit $T_{on}$ particulièrement court à la commutation d'une première tension située au-dessous ou au voisinage de la tension de seuil, à une deuxième tension située dans la partie montante de la caractéristique électro-optique, caractérisé en ce qu'il contient simultanément au moins un composant de formule I

$$R^1\text{-}A^1\text{-}Z^1\text{-}A\text{-}O\text{-}R^2 \quad I$$

dans laquelle

$R^1$ et $R^2$ représentent chacun, indépendamment l'un de l'autre, un groupe alkyle en C 1-C 9 dans lequel un groupe $CH_2$ peut être remplacé par -O- ou -CH=CH-, $R^2$ pouvant également représenter un groupe alcanoyle à chaîne droite en C 2-C 5,

$Z^1$ représente $-CH_2CH_2-$ ou une liaison simple,
$A^1$ représente un groupe trans-1,4-cyclohexylène, et
A représente un groupe 1,4-phénylène non substitué ou substitué par le fluor,

et au moins un composant choisi parmi les composés de formules II et III

$$R^3\text{-}A^2\text{-}Z^2\text{-}A^3\text{-}Z^3\text{-}A'\text{-}R^4 \quad \text{II}$$

$$R^3\text{-}A^2\text{-}Z^2\text{-}A'\text{-}Z^3\text{-}A^3\text{-}R^4 \quad \text{III}$$

dans lesquelles

$R^3$ représente H, un groupe alkyle en C 1-C 9 dans lequel un ou deux groupes $CH_2$ non voisins peuvent être remplacés par -O-, -CO-, -O-CO-, -CO-O- et/ou -CH=CH-,
$R^4$ représente H, un groupe alkyle en C 1-C 9 dans lequel un ou deux groupes $CH_2$ non voisins peuvent être remplacés par -O-, -CO-, -O-CO-, -CO-O- et/ou -CH=CH-, un halogène, un groupe CN, NCS ou $N_3$,
$Z^2$ et $Z^3$ représentent chacun $-CH_2CH_2-$, $-OCH_2-$, $-CH_2O-$, -O-CO-, -COO- ou une liaison simple,
$A^2$ et $A^3$ représentent chacun un groupe trans-1,4-cyclohexylène dans lequel un ou deux groupes $CH_2$ non voisins peuvent être remplacés par O et/ou S, et
A′ représente un groupe 1,4-phénylène non substitué ou substitué par le fluor et dans lequel un ou deux groupes CH peuvent être remplacés par N.

9. Diélectrique selon la revendication 8, caractérisé en ce qu'il contient au moins un composant de formule IV

$$R^3\text{-}A^2\text{-}Z^2\text{-}A^3\text{-}(Z^4\text{-}A^4)_m\text{-}Z^3\text{-}A'\text{-}(Z^5\text{-}A^5)_n\text{-}R^4 \quad \text{IV}$$

dans laquelle

$Z^4$ et $Z^5$ représentent chacun un groupe $-CH_2CH_2-$, $-OCH_2-$, $-CH_2O-$, -O-CO-, -CO-O- ou une liaison simple,
$A^4$ et $A^5$ représentent chacun un groupe trans-1,4-cyclohexylène ou un groupe 1,4-phénylène non substitué ou substitué par le fluor et dans lequel également un ou deux groupes CH peuvent être remplacés par N,
m et n sont égaux chacun à 0 ou 1,

et $R^3$, $R^4$, $A^2$, $A^3$, A′, $Z^2$ et $Z^3$ ont les significations indiquées dans la revendication 4.